# EUROPEAN PATENT SPECIFICATION

(11) **EP 1 862 898 B1**
(45) Date of publication and mention of the grant of the patent: **14.12.2011**
(21) Application number: 07109117.7
(22) Date of filing: 29.05.2007
(51) Int. Cl.: G06F 9/38, G06F 9/48

(54) **Information processing device, information processing method, and computer-readable information recording medium recorded with information processing program for thread priority control**
Informationsverarbeitungsvorrichtung, Informationsverarbeitungsverfahren und mit einem Informationsverarbeitungsprogramm aufgenommenes computerlesbares Informationsaufzeichnungsmedium zur Steuerung von Threadpriorität
Dispositif de traitement des informations, procédé de traitement des informations, et support d'enregistrement d'informations lisibles sur ordinateur enregistrées avec le programme de traitement d'informations pour le control de priorité de filières

(30) Priority: 29.05.2006 JP 2006148088
(43) Date of publication of application: 05.12.2007
(73) Proprietor: Panasonic Corporation, Kadoma-shi Osaka 571-8501 (JP)
(72) Inventor: Kawamoto, Takuji c/o Matsushita Elec. Ind. Co. Ltd., IMP Bldg, 3-7, Shiromi, Chuo-ku, Osaka 540-6319 (JP)
(74) Representative: Schwabe - Sandmair - Marx

(56) References cited:
- US-A1- 2002 199 088
- US-A1- 2004 216 112
- US-A1- 2005 240 934

## Description

### BACKGROUND OF THE INVENTION

### 1. Field of the Invention

The present invention relates to an information processing device of executing a plurality of threads concurrently or time-sharingly, storing an execution result of one of the threads into a storage, and executing the other one of the threads based on the execution result stored in the storage, as well as an information processing method, and a computer-readable information recording medium recorded with an information processing program.

### 2. Description of the Background Art

There is known an information processing device capable of improving efficiency of the entirety of a processing system by performing priority control of a thread in executing the thread such as an imaging operation e.g. an image forming device recited in Japanese Unexamined Patent Publication No. 2005-167555.

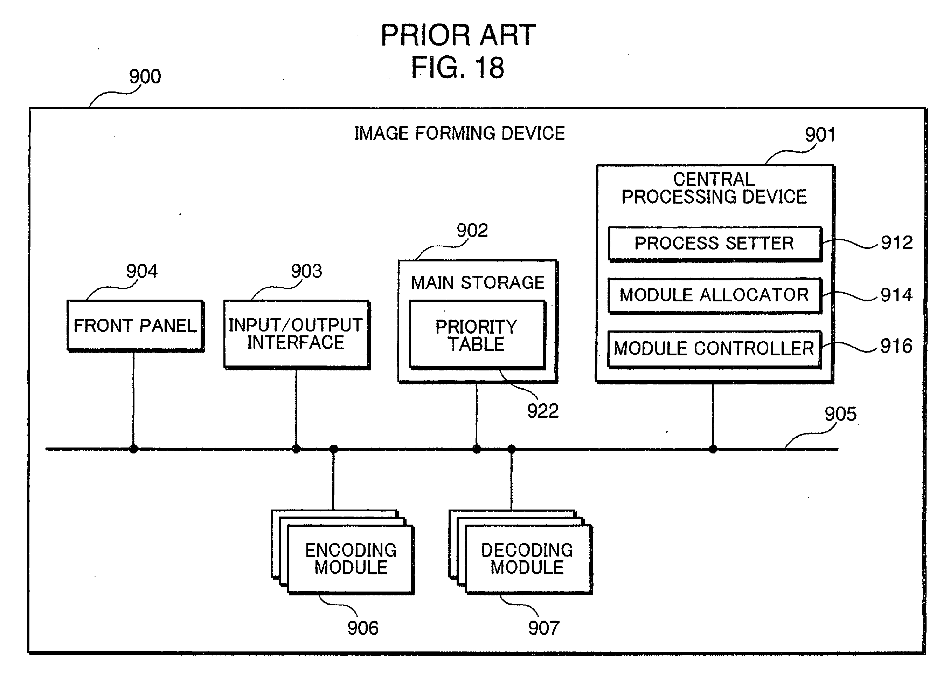

FIG. 18 is a block diagram showing an arrangement of a conventional image forming device. As shown in FIG. 18, the image forming device 900 includes, as primary components, a front panel 904, an input/output interface 903, a main storage 902, a central processing device 901, a plurality of encoding modules 906, a plurality of decoding modules 907, and a system bus 905.

The front panel 904 has one or more of a key input section, a liquid crystal display section, an LED display section, and a like device; and is adapted to accept input of various designation information by a user, and to display various messages to the user. The input/output interface 903 is an interface for allowing data input and output to and from an exterior of the image forming device 900.

The main storage 902 is constituted of an RAM (Random access memory), and records various data for storage. The main storage 902 also stores a priority table 922, in which a process set by a process setter 912 to be described later, and the priority of the process are correlated to each other.

The central processing device 901 is constituted of a CPU (Central Processing Unit), and includes the process setter 912, a module allocator 914, and a module controller 916. The central processing device 901 also has elements other than the above, but description of the other elements will be omitted herein.

The process setter 912 sets processes to be executed individually by the encoding modules 906 or the decoding modules 907, based on an input operation through the front panel 904.

The process setter 912 sets the priorities of the respective processes individually with respect to the encoding modules 906 or the decoding modules 907. Also, the process setter 912 generates the priority table 922, in which the processes and the priorities of the respective processes are correlated to each other. The priority table 922 is stored in the main storage 902.

The module allocator 914 extracts one or more of the processes relating to an encoding/decoding operation necessary for image formation using image data, upon reading the image data inputted through the input/output interface 903, and allocates one or more of the encoding modules 906 or the decoding modules 907 to the extracted process or processes, based on the priority table 922.

The module allocator 914 re-allocates one or more of the encoding modules 906 or the decoding modules 907 to one or more of the processes including a new process, based on the priority table 922, in the case where the new process is generated while the encoding module 906 or the decoding module 907 is under operation.

The module controller 916 controls the encoding module 906 or the decoding module 907 allocated by the module allocator 914 to encode or decode the respective processes in parallel with the other encoding module 906 or the other decoding module 907.

In the conventional image forming device 900, since the priorities of the respective processes are fixed at the time when the processes are generated, and dynamic and optimal control of the processes depending on a load condition of the device is infeasible. There has been attempted an approach that the respective processes dynamically change the priority ranks thereof to compensate for the drawback. However, such an approach does not provide sufficiently satisfactory control.

On the other hand, optimal control may be executable by administering all the processes and a load condition of a memory and by dynamically changing the priority ranks of all the processes. However, such a control is required to be performed by e.g. the central processing device 901, the process setter 912, the module allocator 914, the module controller 916, and the like, which may increase the load of the device, and may result in control overhead.

The patent application US 2005/0240934 A1 discloses a method of managing task execution comprising measuring a parameter indicative of workload and assigning priority of tasks executable on the system based on the measured parameter. In particular, this method is disclosed for access to a redundant array of independent discs (RAID).

Document US 2004/0139441 A1 discloses a processor which performs data processing, on a plurality of execution units, comprising a storage which stores data used for processings of the execution units and processing results by the execution units, by each of the execution units, a data processing part configured to acquire data of the execution units from said storage to perform a processing, and configured to output the processing results in said storage, an execution unit judgement part configured to determine whether or not said storage holds data used for the processings of a certain execution unit, and whether or not said storage has a vacant region capable of storing the processing result of the certain execution unit, and an execution unit determination part which determines an execution unit to be processed next among said plurality of execution units, based on a result judged by said execution unit judgement part.

### SUMMARY OF THE INVENTION

In view of the above problems residing in the prior art, it is an object of the invention to provide an information processing device that enables to control the priorities of threads so that the respective threads optimize the information amount stored in a storage in an autonomous distributed manner, and to optimize the processing load of the entirety of a processing system without control overhead, as well as an information processing method, and a computer-readable recording medium recorded with an information processing program.

An information processing device according to an aspect of the invention is set out in claim 1. It comprises: a storage for storing information therein; a thread executor for executing a thread including a writing operation of writing information into the storage, and a reading operation of reading the information from the storage; and a priority controller for controlling a priority of the thread based on an information amount stored in the storage in at least one of conditions when the writing operation has been executed by the thread executor, and when the reading operation has been executed by the thread executor.

An information processing method according to another aspect of the invention is set out in claim 8. It comprises: a thread execution step of executing a thread including a writing operation of writing information into a storage, and a reading operation of reading the information from the storage; and a priority control step of controlling a priority of the thread based on an information amount stored in the storage in at least one of conditions when the writing operation has been executed in the thread execution step, and when the reading operation has been executed in the thread execution step.

A computer-readable recording medium recorded with an information processing program according to yet another aspect of the invention is set out in claim 9. It is recorded with an information processing program which causes a computer to function as: a storage for storing information therein; a thread executor for executing a thread including a writing operation of writing information into the storage, and a reading operation of reading the information from the storage; and a priority controller for controlling a priority of the thread based on an information amount stored in the storage in at least one of conditions when the writing operation has been executed by the thread executor, and when the reading operation has been executed by the thread executor.

In the above arrangements, the priority of the thread is controlled based on the information amount stored in the storage in at least one of the conditions when the writing operation has been executed, and when the reading operation has been executed.

The above arrangements enable to control the priorities of the threads so that the respective threads optimize the information amount stored in a storage in an autonomous distributed manner, and to optimize the processing load of the entirety of a processing system without control overhead.

These and other objects, features and advantages of the present invention will become more apparent upon reading the following detailed description along with the accompanying drawing.

### BRIEF DESCRIPTION OF THE DRAWINGS

FIG. 1 is a block diagram showing a first hardware configuration of an image processing device, as an example of an information processing device.
FIG. 2 is a block diagram showing a second hardware configuration of the image processing device in the embodiment of the invention.
FIG. 3 is a block diagram showing a third hardware configuration of the image processing device.
FIG. 4 is a diagram showing a configuration of a CPU of the image processing device shown in FIG. 1.
FIG. 5 is a diagram schematically showing threads to be executed in the information processing device embodying the invention.
FIG. 6 is a diagram showing a first thread configuration to be executed in the embodiment of the invention.
FIG. 7 is a diagram showing a second thread configuration to be executed in the embodiment of the invention.
FIG. 8 is a diagram showing a third thread configuration to be executed in the embodiment of the invention.
FIG. 9 is a chart showing an example of contents of a priority control operation to be executed in writing information into a memory.
FIG. 10 is a diagram showing an example of contents of a priority control operation to be executed in reading information from the memory.
FIG. 11 is a flowchart for describing a priority control operation to be executed in writing information by the image processing device shown in FIG. 1.
FIG. 12 is a flowchart for describing a priority control operation to be executed in reading information by the image processing device shown in FIG. 1.
FIG. 13 is a chart showing a first priority control to be executed in accordance with the contents of the priority control operation shown in FIGS. 9 and 10.
FIG. 14 is a chart showing contents of a priority control operation to be executed with respect to an input thread and an output thread in information writing and information reading in the first priority control.
FIG. 15 is a chart showing a second priority control to be executed in accordance with the contents of the priority control operation shown in FIGS. 9 and 10.
FIG. 16 is a chart showing contents of a priority control operation to be executed with respect to an input thread and an output thread in information writing and information reading in the second priority control.
FIG. 17 is a diagram showing a configuration on processes and threads to which a third priority control is applied.
FIG. 18 is a block diagram showing an arrangement of a conventional image forming device.

### DETAILED DESCRIPTION OF THE PREFERRED EMBODIMENTS

In the following, an embodiment of the invention is described referring to the drawings. The embodiment is merely an example for describing the invention, and the invention is not limited by the embodiment. The same idea is applied throughout the description of the specification.

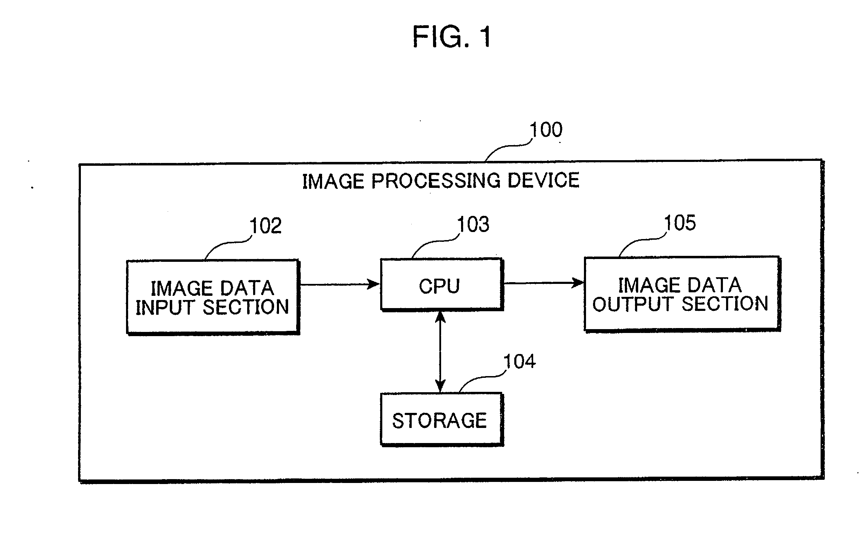

FIG. 1 is a block diagram showing a first hardware configuration of an image processing device 100, as an example of an information processing device.

The image processing device 100 includes a single information processor i.e. a CPU 103, a single storage i.e. a storage 104, an image data input section 102 for inputting image data, as an object to be processed, and an image data output section 105 for outputting image data, as a processing result. The image data input section 102 may be any device including a scanner, a digital camera, a video movie camera, a digital television broadcast receiver, a DVD player (reproducing device), and a communication appliance (a communicating section or a communicating device), as far as the device is capable of inputting image data. The format of image data is not specifically limited, and may include a format encoded by various systems, a compressed and encoded format, an encrypted format, and a format without encoding.

The image data output section 105 outputs image data after applying a predetermined processing to the image data inputted from the image data input section 102, or without applying a processing, according to needs. As far as the image data output section 105 is capable of outputting image data, the image data output section 105 may be any device including a device for displaying an image such as a plasma display device, a liquid crystal display device, and a television monitor; a device for printing an image such as various printers; a device for storing image data such as a DVD recorder and an HDD storage device; and a device for communicating image data with other device such as a communication appliance (a communicating section or a communicating device).

As mentioned above, the image processing device 100 includes the CPU 103 as a single information processor, and the storage 104 as a single storage. With the above configuration, the following three processing units i.e. a first thread, a second thread, and a third thread are executed by the CPU 103 and the storage 104. The first thread includes a writing operation (or writing transaction) of writing information into the storage 104. The second thread includes a reading operation (or reading transaction) of reading information from the storage 104. The third thread includes a priority control operation (or priority control transaction) of prioritizing execution of at least one of the first thread and the second thread, referring to the information amount stored in the storage 104 in at least one of the conditions when the information has been written into the storage 104 and when the information has been read from the storage 104. The CPU 103 and the storage 104 execute the above three threads.

The image processing device 100 having the first hardware configuration is provided with the single CPU 103. Accordingly, the threads cannot be completely concurrently executed, but are executed time-sharingly. Alternatively, all the three threads may not be executed. In other words, some of the three threads may be commonly used for execution. Some of the first thread including the writing operation, the second thread including the reading operation, and the third thread including the priority control operation may be executed by multiple times. A thread other than the above threads may be executed. The configurations and the execution manners of the three threads in the first hardware configuration of the image processing device 100 are described later in detail.

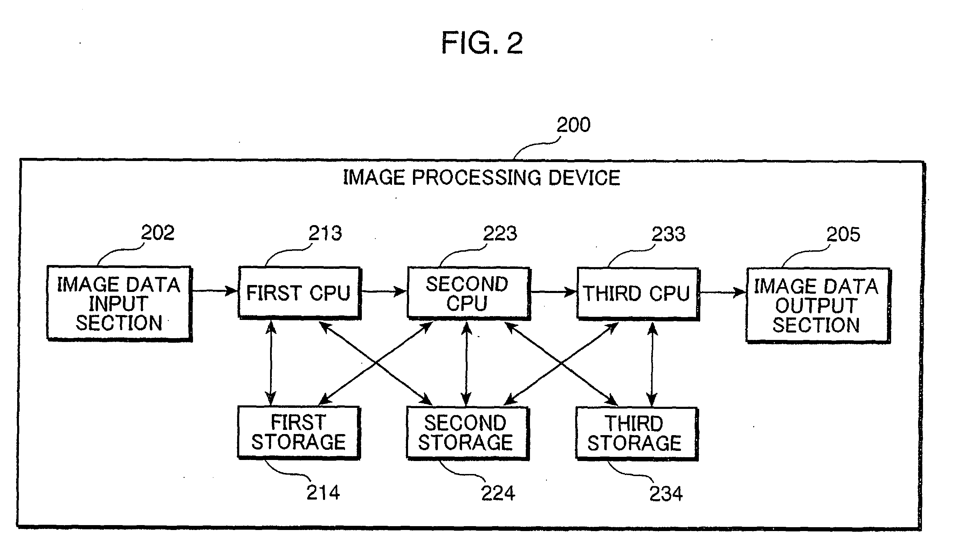

FIG. 2 is a block diagram showing a second hardware configuration of an image processing device 200 in the embodiment of the invention.

The image processing device 200 includes three information processors i.e. a first CPU 213, a second CPU 223, a third CPU 233, three storages i.e. a first storage 214, a second storage 224, and a third storage 234, an image data input section 202 for inputting image data, as an object to be processed, and an image data output section 205 for outputting image data, as a processing result. The image data input section 202 and the image data output section 205 may be identical to or different from those of the image processing device 100 having the first hardware configuration.

As mentioned above, the image processing device 200 includes the three information processors i.e. the first CPU 213, the second CPU 223, the third CPU 233, and the three storages i.e. the first storage 214, the second storage 224, and the third storage 234. With the above configuration, the following three processing units i.e. a first thread, a second thread, and a third thread are executed. The first thread includes a writing operation of writing information into the first storage 214, or the second storage 224, or the third storage 234. The second thread includes a reading operation of reading information from the first storage 214, or the second storage 224, or the third storage 234. The third thread includes a priority control operation of prioritizing execution of at least one of the first thread and the second thread, referring to the information amount stored in the first storage 214, or the second storage 224, or the third storage 234 in at least one of the conditions when the information has been written into the first storage 214, or the second storage 224, or the third storage 234, and when the information has been read from the first storage 214, or the second storage 224, or the third storage 234. The first, the second, and the third CPUs 213, 223, and 233, and the first, the second, and the third storages 214, 224, and 234 execute the above three threads.

In the above arrangement, the first CPU 213 may execute the first thread, the second CPU 223 may execute the second thread, and the third CPU 233 may execute the third thread. Further alternatively, the first CPU 213, the second CPU 223, and the third CPU 233 may execute the first thread, the second thread, and the third thread in a manner other than the aforementioned manner.

For instance, the first CPU 213 may execute the first thread and the second thread, and the second CPU 223 may execute the third thread. For instance, the third CPU 233 may execute the first thread, and the second CPU 223 may execute the second thread and the third thread. Further alternatively, the first CPU 213 may execute all or a part of the first thread, the second thread, and the third thread; the second CPU 223 may execute all or a part of the first thread, the second thread, and the third thread; and the third CPU 233 may execute all or a part of the first thread, the second thread, and the third thread.

Further alternatively, the first CPU 213 may use the first storage 214, the second CPU 223 may use the second storage 224, and the third CPU 233 may use the third storage 234. Further alternatively, the CPUs may use the storages in a manner other than the aforementioned manner. For instance, as shown in FIG. 2, the first CPU 213 may use the first storage 214 and the second storage 224, the second CPU 223 may use the first storage 214, the second storage 224, and the third storage 234, and the third CPU 233 may use the second storage 224 and the third storage 234. Further alternatively, the using manner is not limited to the one shown in FIG. 2. In other words, the first CPU 213 may use the third storage 234, or the third CPU 233 may use the first storage 214.

Further alternatively, the second storage 224 may be omitted. In this case, the first CPU 213 may use the first storage 214, the second CPU 223 may use the first storage 214 and the third storage 234, and the third CPU 233 may use the third storage 234. In this case, the first storage 214 may be used to communicate data between the first CPU 213 and the second CPU 223, and the third storage 234 may be used to communicate data between the second CPU 223 and the third CPU 233. Further alternatively, the storages may be used in a manner other than the aforementioned manner.

The image processing device 200 having the second hardware configuration is provided with the three CPUs as mentioned above. Accordingly, the threads can be completely concurrently executed, and also can be time-sharingly executed. Alternatively, all the three threads may not be executed. In other words, some of the three threads may be commonly used for execution. Some of the first thread including the writing operation, the second thread including the reading operation, and the third thread including the priority control operation may be executed by multiple times. A thread other than the above threads may be executed. The configurations and the execution manners of the three threads in the second hardware configuration of the image processing device 200 are described later in detail.

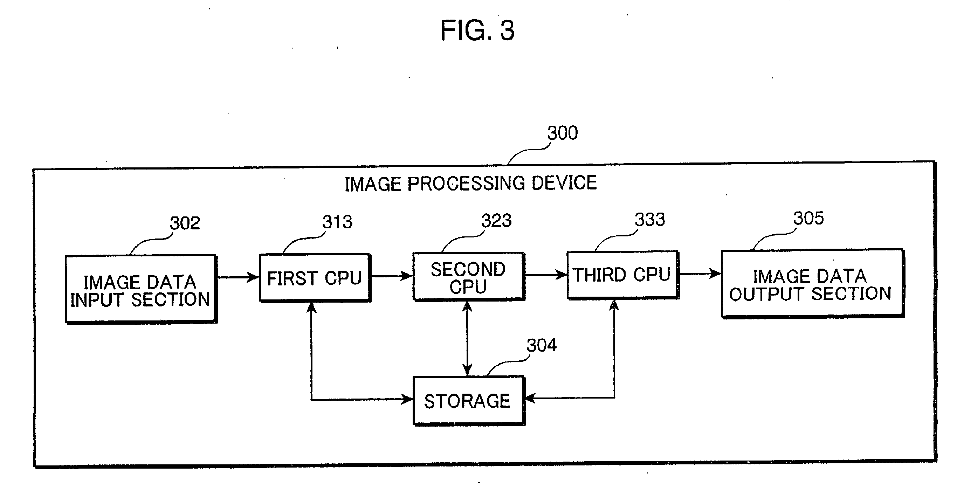

FIG. 3 is a block diagram showing a third hardware configuration of an image processing device 300.

The image processing device 300 includes three information processors i.e. a first CPU 313, a second CPU 323, a third CPU 333, a single storage i.e. a storage 304, an image data input section 302 for inputting image data, as an object to be processed, and an image data output section 305 for outputting image data, as a processing result. The image data input section 302 and the image data output section 305 may be identical to or different from those of the image processing device 100 having the first hardware configuration.

As mentioned above, the image processing device 300 includes the three information processors i.e. the first CPU 313, the second CPU 323, the third CPU 333, and the single storage i.e. the storage 304. With this configuration, the following three processing units i. e. a first thread, a second thread, and a third thread are executed. The first thread includes a writing operation of writing information into the storage 304. The second thread includes a reading operation of reading information from the storage 304. The third thread includes a priority control operation of prioritizing execution of at least one of the first thread and the second thread, referring to the information amount stored in the storage 304 in at least one of the conditions when the information has been written into the storage 304 and when the information has been read from the storage 304. The first, the second, and the third CPUs 313, 323, and 333, and the storage 304 execute the above three threads.

In the above arrangement, the first CPU 313 may execute the first thread, the second CPU 323 may execute the second thread, and the third CPU 333 may execute the third thread. Further alternatively, the first CPU 313, the second CPU 323, and the third CPU 333 may execute the first thread, the second thread, and the third thread in a manner other than the aforementioned manner.

For instance, the first CPU 313 may execute the first thread and the second thread, and the second CPU 323 may execute the third thread. For instance, the third CPU 333 may execute the first thread, and the second CPU 323 may execute the second thread and the third thread. Further alternatively, the first CPU 313 may execute all or a part of the first thread, the second thread, and the third thread; the second CPU 323 may execute all or a part of the first thread, the second thread, and the third thread; and the third CPU 333 may execute all or a part of the first thread, the second thread, and the third thread. The first CPU 313, the second CPU 323, and the third CPU 333 commonly use the single storage 304 to execute the respective operations.

The image processing device 300 having the third hardware configuration is provided with the three CPUs as mentioned above. Accordingly, the threads can be completely concurrently executed, and also can be executed time-sharingly. Since the single storage 304 is commonly used, the image processing device 300 may wait if an access to the storage 304 is multiplied.

Alternatively, all the three threads may not be executed. In other words, some of the three threads may be commonly used for execution. Some of the first thread including the writing operation, the second thread including the reading operation, and the third thread including the priority control operation may be executed by multiple times. A thread other than the above threads may be executed. The configurations and the execution manners of the three threads in the third hardware configuration of the image processing device 300 are described later in detail.

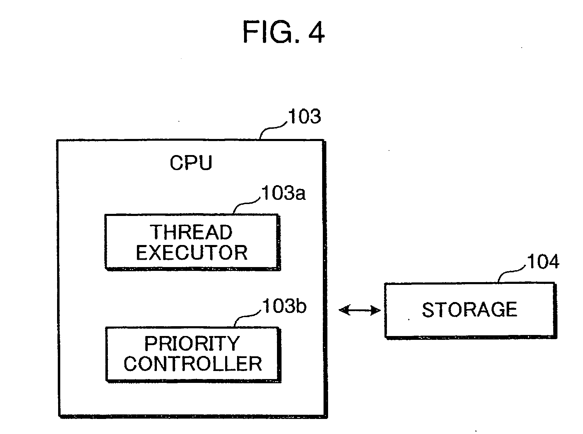

Next, an arrangement of the CPU 103 of the image processing device 100 shown in FIG. 1 is described. FIG. 4 is a diagram showing the arrangement of the CPU 103 of the image processing device shown in FIG. 1. Referring to FIG. 4, the CPU 103 has a thread executor 103a and a priority controller 103b.

The thread executor 103a executes a thread including a writing operation of writing information into the storage 104, and a reading operation of reading information from the storage 104.

The priority controller 103b controls the priority of the thread based on the information amount stored in the storage 104 in at least one of the conditions when the writing operation has been executed by the thread executor 103a and when the reading operation has been executed by the thread executor 103a.

Specifically, the thread executor 103a executes the first thread including the writing operation, and the second thread including the reading operation. The priority controller 103b compares the information amount stored in the storage 104 with a predetermined reference amount, executes at least one of an operation of raising the priority of the first thread and an operation of lowering the priority of the second thread, if the information amount is smaller than the reference amount; executes at least one of an operation of lowering the priority of the first thread and an operation of raising the priority of the second thread, if the information amount is larger than the reference amount; and executes an operation of maintaining the current priority of the first thread and an operation of maintaining the current priority of the second thread, if the information amount is equal to the reference amount.

The storage 104 stores priority information, in which thread identification information for identifying the threads, and the priorities of the threads are correlated to each other. The priority controller 103b changes the priority information stored in the storage 104 in changing the priorities of the respective threads. The thread executor 103a executes the respective threads in accordance with the priorities thereof, by referring to the priority information stored in the storage 104.

The information amount stored in the storage 104 is compared with the predetermined reference amount. Alternatively, the priority controller 103b may compare the information amount with a predetermined first reference amount, execute at least one of an operation of raising the priority of the first thread and an operation of lowering the priority of the second thread, if the information amount is smaller than the first reference amount; and compare the information amount with a second reference amount larger than the first reference amount, if the information amount is equal to or larger than the first reference amount, and execute at least one of an operation of lowering the priority of the first thread and an operation of raising the priority of the second thread, if the information amount is larger than the second reference amount. If the information amount is not smaller than the first reference amount and is not larger than the second reference amount, the priority controller 103b executes an operation of maintaining the current priority of the first thread, and an operation of maintaining the current priority of the second thread.

The first, the second, and the third CPUs 213, 223, and 233 of the image processing device 200 shown in FIG. 2, and the first, the second, and the third CPUs 313, 323, and 333 of the image processing device 300 shown in FIG. 3 have arrangements identical to the arrangement of the CPU 103 shown in FIG. 4.

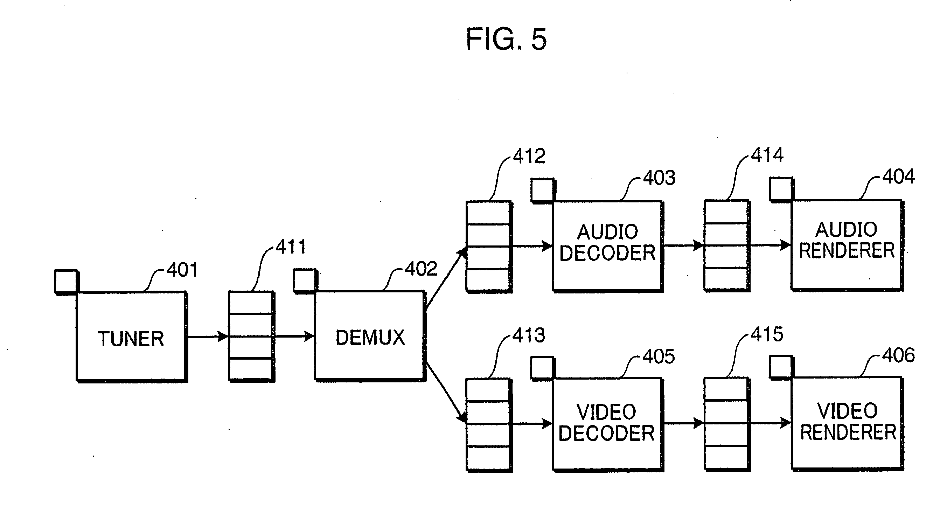

Next, an arrangement of the threads to be executed by the information processing device is described. FIG. 5 is a diagram showing the arrangement of the threads to be executed by the information processing device. A tuner 401, a demux 402, an audio decoder 403, an audio renderer 404, a video decoder 405, and a video renderer 406 shown in FIG. 5 are examples of the threads to be executed by the CPU. First through fifth queues 411 through 415 are examples of the storage.

The tuner 401 receives a broadcast signal and writes the broadcast signal into the first queue 411. The demux 402 reads the broadcast signal from the first queue 411, separates the broadcast signal into an audio stream and a video stream, writes the audio stream into the second queue 412, and writes the video stream into the third queue 413. The audio decoder 403 reads the audio stream from the second queue 412, decodes the read audio stream, and writes the decoded audio stream into the fourth queue 414. The audio renderer 404 reads the decoded audio stream from the fourth queue 414 for rendering. The video decoder 405 reads the video stream from the third queue 413, decodes the read video stream, and writes the decoded video stream into the fifth queue 415. The video renderer 406 reads the decoded video stream from the fifth queue 415 for rendering.

In this way, in the embodiment, an execution result of one of the threads is written in a queue i.e. the storage, the execution result stored in the queue is read by the other thread, and the execution result of the other one of the threads is written in another queue. The priorities are allocated to the respective threads, and the thread whose priority is higher than those of the other threads is executed prior to the other threads.

Next, the threads to be executed by the respective CPUs in the image processing device 100 having the first hardware configuration, the image processing device 200 having the second hardware configuration, and the image processing device 300 having the third hardware configuration, the writing operations, the reading operations, and the priority control operations to be executed in association with the executions of the threads are described in detail.

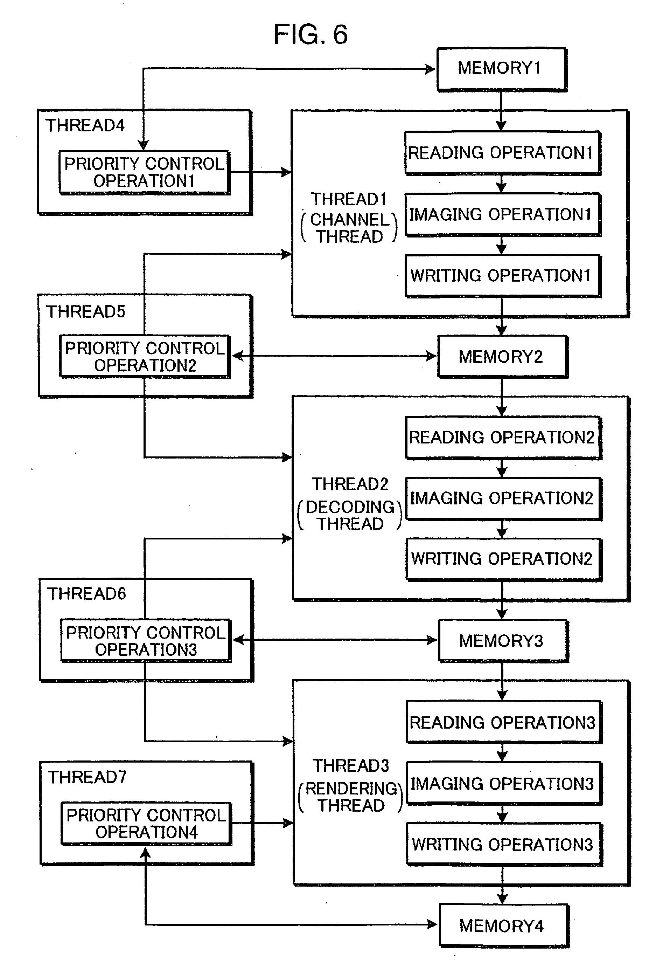

FIG. 6 is a diagram showing a first thread configuration to be executed in the embodiment. The first thread configuration shown in FIG. 6 includes seven threads i.e. a thread 1, a thread 2, a thread 3, a thread 4, a thread 5, a thread 6, and a thread 7.

In the first thread configuration, image data to be inputted is a television broadcast image. The thread 1 is a channel thread for selecting a channel through which image data is transmitted, based on the television broadcast signal. The thread 2 is a decoding thread for decoding the image data which has been received through the selected channel. The thread 3 is a rendering thread for rendering an image based on the decoded image data. The image data, the contents of the image processing, and the threads described herein are merely an example for describing the embodiment. The embodiment is not limited to the example. In the embodiment, the image data and the image processing are described as an example. Various data and various processing including sound data and a sound processing, multi-media data and various processing thereof, and text data and various processing thereof are applicable.

The thread 1 includes a reading operation 1, an imaging operation 1, and a writing operation 1. The thread 2 includes a reading operation 2, an imaging operation 2, and a writing operation 2. The thread 3 includes a reading operation 3, an imaging operation 3, and a writing operation 3.

The reading operation 1 is an operation of reading data to be processed by the thread 1 from a memory 1. The writing operation 1 is an operation of writing the data processed by the thread 1 into a memory 2. The reading operation 2 is an operation of reading data to be processed by the thread 2 from the memory 2. The writing operation 2 is an operation of writing the data processed by the thread 2 into a memory 3. The reading operation 3 is an operation of reading data to be processed by the thread 3 from the memory 3. The writing operation 3 is an operation of writing the data processed by the thread 3 into a memory 4.

There are provided the thread 4, the thread 5, the thread 6, and the thread 7, in addition to the threads 1, 2, and 3, and the aforementioned operations. The thread 4 includes a priority control operation 1 of controlling the priority of the thread 1. The thread 5 includes a priority control operation 2 of controlling the priorities of the thread 1 and the thread 2. The thread 6 includes a priority control operation 3 of controlling the priorities of the thread 2 and the thread 3. The thread 7 includes a priority control operation 4 of controlling the priority of the thread 3.

The priority control operation 1 compares the information amount stored in the memory 1 with a predetermined reference amount, and controls the priority of the thread 1 based on the comparison result. The priority control operation 1 may control the priority of one or more of the reading operation 1, the imaging operation 1, and the thread 1, in place of controlling the priority of the thread 1.

The priority control operation 2 compares the information amount stored in the memory 2 with the reference amount, and controls the priorities of the thread 1 and the thread 2 based on the comparison result. The priority control operation 2 may control the priority of one or more of the writing operation 1, the reading operation 2, the imaging operation 1, the imaging operation 2, the thread 1, and the thread 2, in place of controlling the priorities of the thread 1 and the thread 2.

The priority control operation 3 compares the information amount stored in the memory 3 with the reference amount, and controls the priorities of the thread 2 and the thread 3 based on the comparison result. The priority control operation 3 may control the priority of one or more of the writing operation 2, the reading operation 3, the imaging operation 2, the imaging operation 3, the thread 2, and the thread 3, in place of controlling the priorities of the thread 2 and the thread 3.

The priority control operation 4 compares the information amount stored in the memory 4 with the reference amount, and controls the priority of the thread 3 based on the comparison result. The priority control operation 4 may control the priority of one or more of the writing operation 3, the imaging operation 3, and the thread 3, in place of controlling the priority of the thread 3.

In the embodiment, the reference amounts to be used in the priority control operations 1 through 4 are identical to each other. Alternatively, the reference amounts to be used in the priority control operations 1 through 4 may be different from each other. In the modification, the reference amounts to be used in the priority control operations 1 through 4 are set to information amounts that enable to prevent information underflow in the respective memories. By setting the reference amounts as mentioned above, the priorities of the respective threads can be controlled with high precision. The same idea is also applied to the below-mentioned description.

Further alternatively, all the priority control operation 1, the priority control operation 2, the priority control operation 3, and the priority control operation 4 may not be provided. In other words, some of the priority control operations 1 through 4 may be omitted. Further alternatively, the priority control operations 1 through 4 may be commonly used for execution. Further alternatively, an operation other than the priority control operations 1 through 4 may be provided.

In the case where the first thread configuration is executed by the image processing device 100 having the first hardware configuration, the CPU 103 executes the thread 1, the thread 2, the thread 3, all the operations included in the threads 1, 2, and 3, the thread 4, the thread 5, the thread 6, and the thread 7, and the priority control operations 1, 2, 3, and 4 included in the respective corresponding threads 4, 5, 6, and 7. The storage 104 is used as the memory 1, the memory 2, the memory 3, and the memory 4.

In the case where the first thread configuration is executed by the image processing device 200 having the second hardware configuration, the first CPU 213 executes the thread 1 and all the operations included in the thread 1, the second CPU 223 executes the thread 2 and all the operations included in the thread 2, and the third CPU 233 executes the thread 3 and all the operations included in the thread 3. The embodiment is not limited to the foregoing example.

The first storage 214 is used as the memory 1, one or both of the first storage 214 and the second storage 224 is used as the memory 2, one or both of the second storage 224 and the third storage 234 is used as the memory 3, and the third storage 234 is used as the memory 4. The embodiment is not limited to the foregoing example.

The priority control operation 1 is executed by the first CPU 213, the priority control operation 2 is executed by one or both of the first CPU 213 and the second CPU 223, the priority control operation 3 is executed by one or both of the second CPU 223 and the third CPU 233, and the priority control operation 4 is executed by the third CPU 233. The embodiment is not limited to the foregoing example.

In the case where the first thread configuration is executed by the image processing device 300 having the third hardware configuration, the first CPU 313 executes the thread 1 and all the operations included in the thread 1, the second CPU 323 executes the thread 2 and all the operations included in the thread 2, and the third CPU 333 executes the thread 3 and all the operations included in the thread 3. The embodiment is not limited to the foregoing example.

The storage 304 is used as the memory 1, the memory 2, the memory 3, and the memory 4. The priority control operation 1 is executed by the first CPU 313, the priority control operation 2 is executed by one or both of the first CPU 313 and the second CPU 323, the priority control operation 3 is executed by one or both of the second CPU 323 and the third CPU 333, and the priority control operation 4 is executed by the third CPU 333. The embodiment is not limited to the foregoing example.

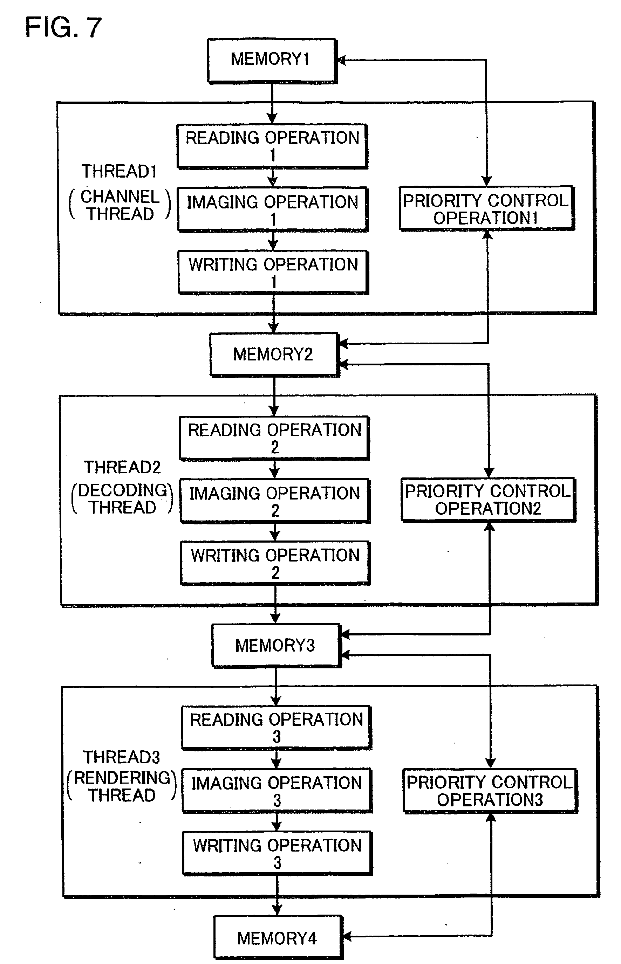

FIG. 7 is a diagram showing a second thread configuration to be executed in the embodiment. The second thread configuration includes three threads i.e. a thread 1, a thread 2, and a thread 3. The threads 1, 2, and 3 have the same arrangements as the threads in the first thread configuration. The embodiment is not limited to the example.

The thread 1 includes a reading operation 1, an imaging operation 1, a writing operation 1, and a priority control operation 1. The thread 2 includes a reading operation 2, an imaging operation 2, a writing operation 2, and a priority control operation 2. The thread 3 includes a reading operation 3, an imaging operation 3, a writing operation 3, and a priority control operation 3. The reading operations, the imaging operations, and the writing operations in the second thread configuration are identical to those in the first thread configuration. The embodiment is not limited to the example.

The priority control operation 1 compares the information amount stored in the memory 1 with a predetermined reference amount, and controls the priority of one or more of the thread 1, the reading operation 1, and the imaging operation 1, based on the comparison result. The priority control operation 1 also compares the information amount stored in the memory 2 with the reference amount, and controls the priority of one or more of the thread 1, the writing operation 1, and the imaging operation 1.

The priority control operation 2 compares the information amount stored in the memory 2 with the reference amount, and controls the priority of one or more of the thread 2, the reading operation 2, and the imaging operation 2 based on the comparison result. The priority control operation 2 also compares the information amount stored in the memory 3 with the reference amount, and controls the priority of one or more of the thread 2, the writing operation 2, and the imaging operation 2 based on the comparison result.

The priority control operation 3 compares the information amount stored in the memory 3 with the reference amount, and controls the priority of one or more of the thread 3, the reading operation 3, and the imaging operation 3 based on the comparison result. The priority control operation 3 also compares the information amount stored in the memory 4 with the reference amount, and controls the priority of one or more of the thread 3, the writing operation 3, and the imaging operation 3 based on the comparison result.

Alternatively, all the priority control operation 1, the priority control operation 2, and the priority control operation 3 may not be provided. In other words, some of the priority control operations 1 through 3 may be omitted. Further alternatively, the priority control operations 1 through 3 may be commonly used for execution, or an operation other than the priority control operations 1 through 3 may be provided.

In the case where the second thread configuration is executed by the image processing device 100 having the first hardware configuration, the CPU 103 executes the thread 1, the thread 2, the thread 3, and all the operations included in the threads 1, 2, and 3. The storage 104 is used as the memory 1, the memory 2, the memory 3, and the memory 4.

In the case where the second thread configuration is executed by the image processing device 200 having the second hardware configuration, the first CPU 213 executes the thread 1 and all the operations included in the thread 1, the second CPU 223 executes the thread 2 and all the operations included in the thread 2, and the third CPU 233 executes the thread 3 and all the operations included in the thread 3. The embodiment is not limited to the foregoing example.

The first storage 214 is used as the memory 1, one or both of the first storage 214 and the second storage 224 is used as the memory 2, one or both of the second storage 224 and the third storage 234 is used as the memory 3, and the third storage 234 is used as the memory 4. The embodiment is not limited to the foregoing example.

In the case where the second thread configuration is executed by the image processing device 300 having the third hardware configuration, the first CPU 313 executes the thread 1 and all the operations included in the thread 1, the second CPU 323 executes the thread 2 and all the operations included in the thread 2, and the third CPU 333 executes the thread 3 and all the operations included in the thread 3. The storage 304 is used as the memory 1, the memory 2, the memory 3, and the memory 4. The embodiment is not limited to the foregoing example.

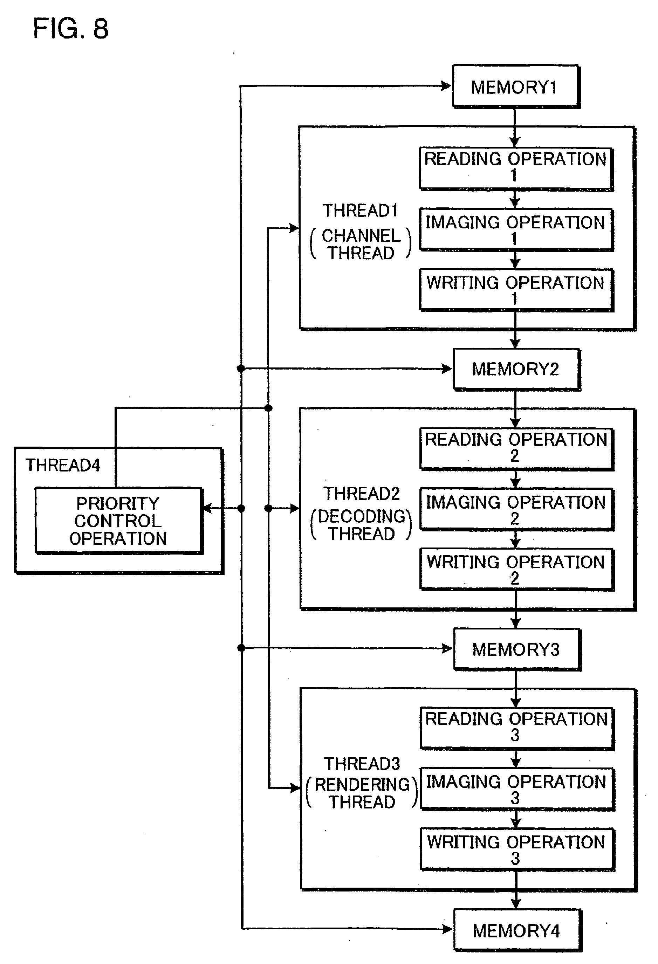

FIG. 8 is a diagram showing a third thread configuration to be executed in the embodiment. The third thread configuration includes four threads i.e. a thread 1, a thread 2, a thread 3, and a thread 4. The threads 1, 2, 3, and 4 have the same arrangements as the threads in the first thread configuration. The embodiment is not limited to the example.

The thread 1 includes a reading operation 1, an imaging operation 1, and a writing operation 1. The thread 2 includes a reading operation 2, an imaging operation 2, and a writing operation 2. The thread 3 includes a reading operation 3, an imaging operation 3, and a writing operation 3. The reading operations, the imaging operations, and the writing operations in the third thread configuration are the same as those in the first thread configuration. The embodiment is not limited to the example.

There is provided the thread 4, in addition to the thread 1, the thread 2, and the thread 3, and the operations included in the threads 1, 2, and 3. The thread 4 includes a priority control operation of controlling the priorities of the thread 1, the thread 2, the thread 3, and the writing operations and the reading operations included in the threads 1, 2, and 3.

The priority control operation compares the information amount stored in the memory 1 with a predetermined reference amount, and controls the priority of the thread 1 based on the comparison result. The priority control operation may control the priority of one or more of the reading operation 1, the imaging operation 1, and the thread 1, in place of controlling the priority of the thread 1.

The priority control operation also compares the information amount stored in the memory 2 with the reference amount, and controls the priorities of the thread 1 and the thread 2 based on the comparison result. The priority control operation may control the priority of one or more of the writing operation 1, the reading operation 2, the imaging operation 1, the imaging operation 2, the thread 1, and the thread 2, in place of controlling the priorities of the thread 1 and the thread 2.

The priority control operation also compares the information amount stored in the memory 3 with the reference amount, and controls the priorities of the thread 2 and the thread 3 based on the comparison result. The priority control operation may control the priority of one or more of the writing operation 2, the reading operation 3, the imaging operation 2, the imaging operation 3, the thread 2, and the thread 3, in place of controlling the priorities of the thread 2 and the thread 3.

The priority control operation also compares the information amount stored in the memory 4 with the reference amount, and controls the priority of the thread 3 based on the comparison result. The priority control operation may control the priority of one or more of the writing operation 3, the imaging operation 3, and the thread 3, in place of controlling the priority of the thread 3.

In the case where the third thread configuration is executed by the image processing device 100 having the first hardware configuration, the CPU 103 executes the thread 1, the thread 2, the thread 3, all the operations included in the threads 1, 2, and 3, and the priority control operation; and the storage 104 is used as the memory 1, the memory 2, the memory 3, and the memory 4.

In the case where the third thread configuration is executed by the image processing device 200 having the second hardware configuration, the first CPU 213 executes the thread 1 and all the operations included in the thread 1, the second CPU 223 executes the thread 2 and all the operations included in the thread 2, and the third CPU 233 executes the thread 3 and all the operations included in the thread 3. The embodiment is not limited to the example.

The first storage 214 is used as the memory 1, one or both of the first storage 214 and the second storage 224 is used as the memory 2, one or both of the second storage 224 and the third storage 234 is used as the memory 3, and the third storage 234 is used as the memory 4. The embodiment is not limited to the foregoing example. The priority control operation is executed by one or more of the first CPU 213, the second CPU 223, and the third CPU 233. The embodiment is not limited to the foregoing example.

In the case where the third thread configuration is executed by the image processing device 300 having the third hardware configuration, the first CPU 313 executes the thread 1 and all the operations included in the thread 1, the second CPU 323 executes the thread 2 and all the operations included in the thread 2, and the third CPU 333 executes the thread 3 and all the operations included in the thread 3. The embodiment is not limited to the foregoing example.

The storage 304 is used as the memory 1, the memory 2, the memory 3, and the memory 4. The priority control operation is executed by one or more of the first CPU 313, the second CPU 323, and the third CPU 333. The embodiment is not limited to the example.

Next, priority control methods to be executed by the respective priority control operations commonly in the first hardware configuration, the second hardware configuration, the third hardware configuration, the first thread configuration, the second thread configuration, and the third thread configuration are described by taking examples of first, second, and third priority controls.

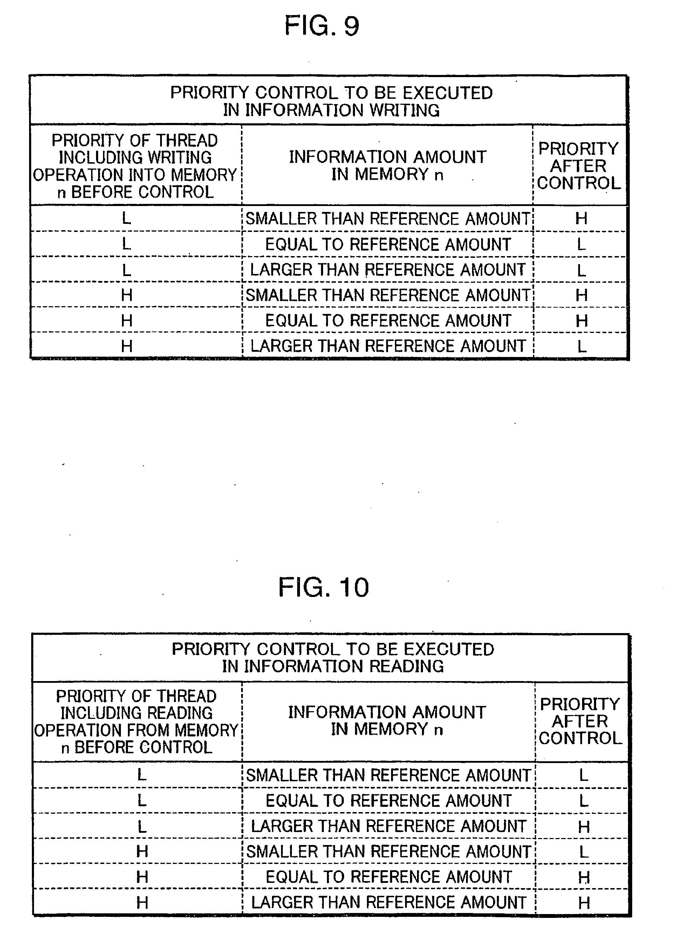

FIGS. 9 and 10 are charts showing examples of priority control to be executed in all the configurations i.e. the first hardware configuration, the second hardware configuration, the third hardware configuration, the first thread configuration, the second thread configuration, and the third thread configuration. FIG. 9 is a chart showing an example of the contents of a priority control operation to be executed in writing information into a memory. FIG. 10 is a chart showing an example of the contents of a priority control operation to be executed in reading information from the memory. The memory for writing or reading information is generically called as "memory n" hereinafter.

In the priority control, the priority levels of the respective threads or the respective operations are expressed by two levels i.e. a high (H) level indicating that the priority is high, and a low (L) level indicating that the priority is low. The priority levels (H/L) can be controlled by e.g. using a difference in interrupt levels of the CPUs 103, 213, 223, 233, 313, 323, and 333, which differ depending on the hardware configurations. Alternatively, the priority levels may be three or more, and the priority level control may be realized by a method other than the method using the difference in interrupt levels. By providing three or more priority levels, finer priority control, and optimization of the entirety of a processing system can be realized.

In the case where three or more priority levels i.e. three or more different values are provided, the priorities of the respective threads are controlled to satisfy the following requirements in at least one of the writing operation and the reading operation. Specifically, if the information amount stored in the memory n is smaller than the predetermined reference amount, the priority of the thread including the writing operation is set higher than the priority of the thread including the reading operation. If the information amount stored in the memory n is larger than the reference amount, the priority of the thread including the writing operation is set lower than the priority of the thread including the reading operation. Further, if the information amount stored in the memory n is equal to the reference amount, the priority of the thread including the writing operation and the priority of the thread including the reading operation are maintained at the respective current priorities.

In the above arrangement, the number of times of setting the priorities of the threads can be decreased by merely changing either one of the priority of the thread including the writing operation, and the priority of the thread including the reading operation.

In the above priority control, the priority control operation z' included in the thread z compares the information amount stored in the memory n with the predetermined reference amount, and controls the priority of the reading operation x of reading information from the memory n, the thread x including the reading operation x, the writing operation y of writing information into the memory n, or the thread y including the writing operation y, based on a judgment as to whether the information amount stored in the memory n is smaller than the reference amount, or the information amount stored in the memory n is equal to the reference amount, or the information amount stored in the memory n is larger than the reference amount.

The symbol "n" is one of "1" through "4"; the symbols "x" and "y" each is one of "1" through "3"; the symbol "z" is one of "1" through "7"; and the symbol "z' " is one of "1" through "4" and blank, which differ depending on the hardware configurations and the thread configurations.

The reference amount to be used in raising the priorities of the respective threads or the respective operations, and the reference amount to be used in lowering the priorities of the respective threads or the respective operations may be different from each other. For instance, the reference amount to be used in raising the priority may be set to a first reference amount=4, and the reference amount to be used in lowering the priority may be set to a second reference amount=3. Providing a so-called hysteresis characteristic to changeover control of the priority enables to execute stable control capable of maintaining a high (or low) priority for a predetermined period, once the priority is set high (or low).

The CPUs for executing the respective threads, and the storages to be used as the memories for the respective threads differ depending on the hardware configurations and the thread configurations. Alternatively, in place of the priority control in the thread unit, the priority control may be executed in the unit of the reading operation x, the writing operation y, and the imaging operation w included in each of the threads, independently or in combination of the priority control in the thread unit, where "w" is one of "1" through "3".

As shown in FIG. 9, for instance, in the priority control to be executed in information writing, in the case where the priority of a thread including an operation of writing information into the memory n before the priority control is set to L level, and the information amount stored in the memory n is smaller than the reference amount, the priority of the thread including the operation of writing information into the memory n after the priority control is set to H level.

By implementing the above priority control, the priority of the thread including the writing operation is set high, if the information amount stored in the memory n is smaller than the reference amount, which promotes writing of data into the memory n. As a result, the information amount stored in the memory n is increased to be close to the reference amount.

In the case where the priority of the thread including the operation of writing information into the memory n before the priority control is set to L level, and the information amount stored in the memory n is equal to the reference amount, the priority of the thread including the operation of writing information into the memory n after the priority control is set to L level.

By implementing the above priority control, the priority of the thread is maintained, if the information amount stored in the memory n is equal to the reference amount, which enables to maintain the information amount stored in the memory n substantially at the same level as the reference amount.

In the case where the priority of the thread including the operation of writing information into the memory n before the priority control is set to L level, and the information amount stored in the memory n is larger than the reference amount, the priority of the thread including the operation of writing information into the memory n after the priority control is set to L level.

By implementing the above priority control, the priority of the thread is kept low, if the information amount stored in the memory n is larger than the reference amount. This enables to decrease the information amount stored in the memory n to be close to the reference amount.

In the case where the priority of the thread including the operation of writing information into the memory n before the priority control is set to H level, and the information amount stored in the memory n is smaller than the reference amount, the priority of the thread including the operation of writing information into the memory n after the priority control is set to H level.

By implementing the above priority control, the priority of the thread including the writing operation is kept high, if the information amount stored in the memory n is smaller than the reference amount, which promotes writing of data into the memory n. As a result, the information amount stored in the memory n is increased to be close to the reference amount.

In the case where the priority of the thread including the operation of writing information into the memory n before the priority control is set to H level, and the information amount stored in the memory n is equal to the reference amount, the priority of the thread including the operation of writing information into the memory n after the priority control is set to H level.

By implementing the above priority control, the priority of the thread is maintained, if the information amount stored in the memory n is equal to the reference amount, which enables to maintain the information amount stored in the memory n substantially at the same level as the reference amount.

In the case where the priority of the thread including the operation of writing information into the memory n before the priority control is set to H level, and the information amount stored in the memory n is larger than the reference amount, the priority of the thread including the operation of writing information into the memory n after the priority control is set to L level.

By implementing the above priority control, the priority of the thread including the writing operation is set low, if the information amount stored in the memory n is larger than the reference amount, which suppresses writing of data into the memory n. As a result, the information amount stored in the memory n is decreased to be close to the reference amount.

Also, as shown in FIG. 10, in the priority control to be executed in reading information from the memory n, for instance, in the case where the priority of a thread including an operation of reading information from the memory n before the priority control is set to L level, and the information amount stored in the memory n is smaller than the reference amount, the priority of the thread including the operation of reading information from the memory n after the priority control is set to L level.

By implementing the above priority control, the priority of the thread including the reading operation is kept low, if the information amount stored in the memory n is smaller than the reference amount, which suppresses reading of data from the memory n. As a result, the information amount stored in the memory n is increased to be close to the reference amount.

In the case where the priority of the thread including the operation of reading information from the memory n before the priority control is set to L level, and the information amount stored in the memory n is equal to the reference amount, the priority of the thread including the operation of reading information from the memory n after the priority control is set to L level.

By implementing the above priority control, the priority of the thread is maintained, if the information amount stored in the memory n is equal to the reference amount, which enables to maintain the information amount stored in the memory n substantially at the same level as the reference amount.

In the case where the priority of the thread including the operation of reading information from the memory n before the priority control is set to L level, and the information amount stored in the memory n is larger than the reference amount, the priority of the thread including the operation of reading information from the memory n after the priority control is set to H level.

By implementing the above priority control, the priority of the thread including the reading operation is set high, if the information amount stored in the memory n is larger than the reference amount. This enables to decrease the information amount stored in the memory n to be close to the reference amount.

In the case where the priority of the thread including the operation of reading information from the memory n before the priority control is set to H level, and the information amount stored in the memory n is smaller than the reference amount, the priority of the thread including the operation of reading information from the memory n after the priority control is set to L level.

By implementing the above priority control, the priority of the thread including the reading operation is set low, if the information amount stored in the memory n is smaller than the reference amount, which suppresses reading of data from the memory n. As a result, the information amount stored in the memory n is increased to be close to the reference amount.

In the case where the priority of the thread including the operation of reading information from the memory n before the priority control is set to H level, and the information amount stored in the memory n is equal to the reference amount, the priority of the thread including the operation of reading information from the memory n after the priority control is set to H level.

By implementing the above priority control, the priority of the thread is maintained, if the information amount stored in the memory n is equal to the reference amount, which enables to maintain the information amount stored in the memory n substantially at the same level as the reference amount.

In the case where the priority of the thread including the operation of reading information from the memory n before the priority control is set to H level, and the information amount stored in the memory n is larger than the reference amount, the priority of the thread including the operation of reading information from the memory n after the priority control is set to H level.

By implementing the above priority control, the priority of the thread including the reading operation is kept high, if the information amount stored in the memory n is larger than the reference amount, which promotes reading of data from the memory n. As a result, the information amount stored in the memory n is decreased to be close to the reference amount.

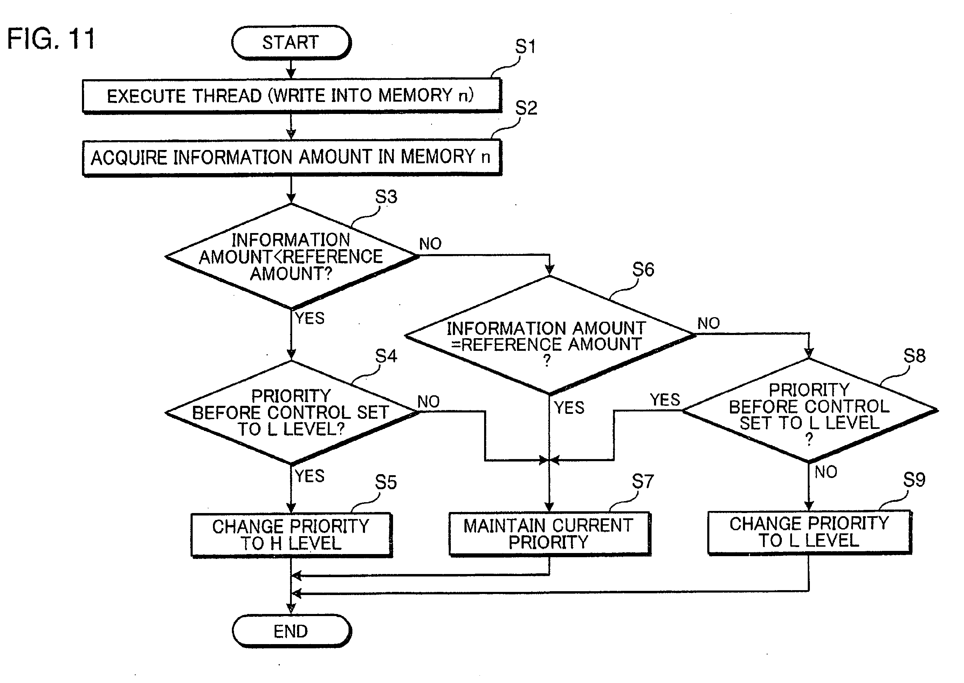

Next, the priority control operation to be executed in the embodiment is described. In the embodiment, the priority control operation to be executed in information writing, and the priority control operation to be executed in information reading are different. First, the priority control operation to be executed in information writing is described. FIG. 11 is a flowchart for describing the priority control operation to be executed in information writing by the image processing device 100 shown in FIG. 1.

First, in Step S1, the CPU 103 executes a thread. Specifically, the CPU 103 writes information into the memory n by executing the thread. The storage 104 includes plural memories, and the memory n represents one of the memories. Then, in Step S2, the CPU 103 acquires a current information amount stored in the memory n.

Then, in Step S3, the CPU 103 judges whether the acquired information amount stored in the memory n is smaller than a predetermined reference amount. In the embodiment, an information amount that does not cause underflow of information in the memory n is predefined and stored in the storage 104, as the reference amount. If it is judged that the information amount stored in the memory n is smaller than the reference amount (YES in Step S3), in Step S4, the CPU 103 judges whether the priority of the thread that has executed the writing operation is set to L level.

If it is judged that the priority of the thread that has executed the writing operation is set to L level (YES in Step S4), in Step S5, the CPU 103 changes the priority of the thread that has executed the writing operation from L level to H level. If, on the other hand, it is judged that the priority of the thread that has executed the writing operation is not set to L level, in other words, the priority of the thread that has executed the writing operation is set to H level (NO in Step S4), in Step S7, the CPU 103 maintains the priority of the thread that has executed the writing operation to the current level.

If it is judged that the information amount stored in the memory n is equal to or larger than the reference amount (NO in Step S3), in Step S6, the CPU 103 judges whether the information amount stored in the memory n is equal to the reference amount. If it is judged that the information amount stored in the memory n is equal to the reference amount (YES in Step S6), in Step S7, the CPU 103 maintains the priority of the thread that has executed the writing operation to the current level.

If, on the other hand, it is judged that the information amount stored in the memory n is not equal to the reference amount, in other words, the information amount stored in the memory n is larger than the reference amount (NO in Step S6), in Step S8, the CPU 103 judges whether the priority of the thread that has executed the writing operation is set to L level.

If it is judged that the priority of the thread that has executed the writing operation is set to L level (YES in Step S8), in Step S7, the CPU 103 maintains the priority of the thread that has executed the writing operation to the current level. If, on the other hand, it is judged that the priority of the thread that has executed the writing operation is not set to L level, in other words, the priority of the thread that has executed the writing operation is set to H level (NO in Step S8), in Step S9, the CPU 103 changes the priority of the thread that has executed the writing operation from H level to L level.

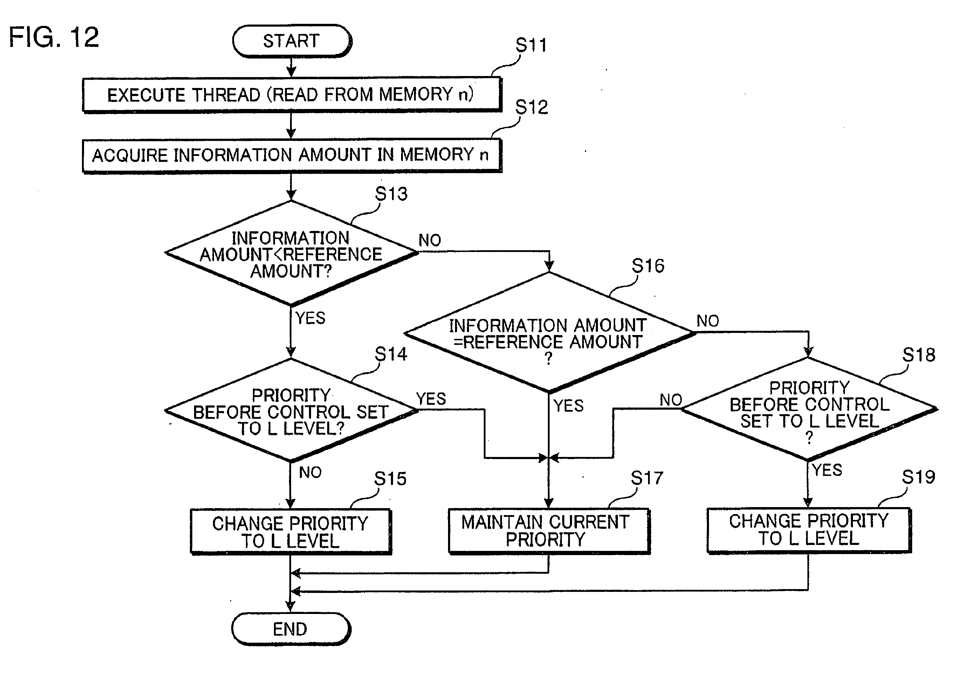

Next, the priority control operation to be executed in information reading is described. FIG. 12 is a flowchart for describing the priority control operation to be executed in information reading by the image processing device 100 shown in FIG. 1.

First, in Step S11, the CPU 103 executes a thread. Specifically, the CPU 103 reads information from the memory n by executing the thread. Then, in Step S12, the CPU 103 acquires the current information amount stored in the memory n.

Then, in Step S13, the CPU 103 judges whether the acquired information amount stored in the memory n is smaller than the predetermined reference amount. If it is judged that the information amount stored in the memory n is smaller than the reference amount (YES in Step S13), in Step S14, the CPU 103 judges whether the priority of the thread that has executed the reading operation is set to L level.

If it is judged that the priority of the thread that has executed the reading operation is set to L level (YES in Step S14), in Step S17, the CPU 103 maintains the priority of the thread that has executed the reading operation to the current level. If, on the other hand, it is judged that the priority of the thread that has executed the reading operation is not set to L level, in other words, the priority of the thread that has executed the reading operation is set to H level (NO in Step S14), in Step S15, the CPU 103 changes the priority of the thread that has executed the reading operation from H level to L level.

If it is judged that the information amount stored in the memory n is equal to or larger than the reference amount (NO in Step S13), in Step S16, the CPU 103 judges whether the information amount stored in the memory n is equal to the reference amount. If it is judged that the information amount stored in the memory n is equal to the reference amount (YES in Step S16), in Step S17, the CPU 103 maintains the priority of the thread that has executed the reading operation to the current level.

If, on the other hand, it is judged that the information amount stored in the memory n is not equal to the reference amount, in other words, the information amount stored in the memory n is larger than the reference amount (NO in Step S16), in Step S18, the CPU 103 judges whether the priority of the thread that has executed the reading operation is set to L level.

If it is judged that the priority of the thread that has executed the reading operation is set to L level (YES in Step S18), in Step S19, the CPU 103 changes the priority of the thread that has executed the reading operation from L level to H level. If, on the other hand, it is judged that the priority of the thread that has executed the reading operation is not set to L level, in other words, the priority of the thread that has executed the reading operation is set to H level (NO in Step S18), in Step S17, the CPU 103 maintains the priority of the thread that has executed the reading operation to the current level.

In this way, the priority of the thread is controlled based on the information amount stored in the storage in at least one of the conditions when the writing operation has been executed and when the reading operation has been executed. This enables to control the priorities of the threads so that the respective threads optimize the information amount stored in the storage in an autonomous distributed manner, and to optimize the processing load of the entirety of the processing system without control overhead.

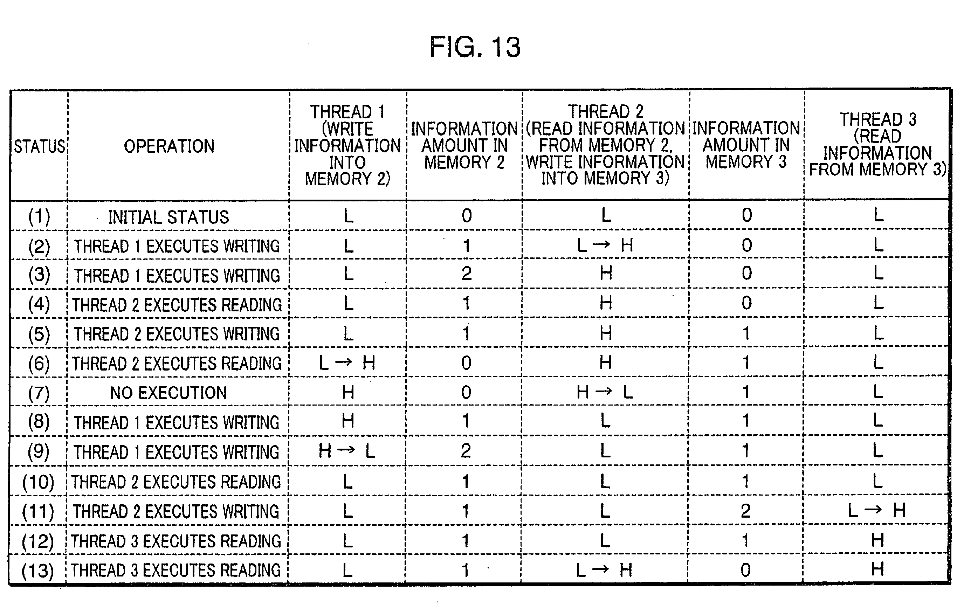

Next, the first priority control to be executed in accordance with the contents of the priority control operation shown in FIGS. 9 and 10 is described referring to FIG. 13. FIG. 13 is a chart showing the first priority control to be executed in accordance with the contents of the priority control operation shown in FIGS. 9 and 10.

In the first priority control, merely one priority is changed in response to a one-time comparison between the information amount stored in the memory and the reference amount to be executed by the priority control operation. Accordingly, a system call for changing the priority is required only once, which enables to suppress control overhead resulting from a system call to minimum. However, there is a case that an intended priority control cannot be performed merely by a one-time comparison between the information amount stored in the memory and the reference amount.

For instance, in the first thread configuration shown in FIG. 6, let it be assumed that the priority of the writing operation 1 of writing information into the memory 2 is set to H level, the priority of the reading operation 2 of reading information from the memory 2 is set to L level, and the information amount stored in the memory 2 is larger than the reference amount.

Under the above condition, in the first priority control, either one of changing the priority of the writing operation 1 to L level, and changing the priority of the reading operation 2 to H level is executed. In the above condition, it may be preferable to simultaneously change the priority of the writing operation 1 to L level and the priority of the reading operation 2 to H level.

In the first priority control, however, the aforementioned priority control is not executed, but merely one priority is changed in response to a one-time comparison between the information amount stored in the memory and the reference amount. Accordingly, a comparison between the information amount stored in the memory and the reference amount is required to be executed twice under the same condition in order to change the priority of the writing operation 1 to L level and to change the priority of the reading operation 2 to H level.

The above priority control enables to suppress control overhead resulting from a system call for changing the priority to minimum, and is applicable to any one of the first through the third thread configurations shown in FIGS. 6 through 8, whereas the below-mentioned second priority control is applicable only to a specific thread configuration.

In the example shown in FIG. 13, the priorities are controlled in the thread unit, in other words, the priorities of the thread 1, the thread 2, and the thread 3 are controlled, in place of controlling in the operation unit such as a reading operation, a writing operation, and an imaging operation. The thread 1 executes an operation of writing a processing result into the memory 2. In this example, the processing result is a result of an imaging operation. The same definition is applied to the below-mentioned examples. However, the embodiment is not limited to this example. The thread 2 executes an operation of reading information from the memory 2, and an operation of writing a processing result into the memory 3. The thread 3 executes an operation of reading information from the memory 3.

One of the priority control operations (which differ depending on the first through the third thread configurations) compares the information amount stored in the memory 2 with the reference amount, and controls the priorities of the thread 1 and the thread 2. Further, the one priority control operation or the other one of the priority control operations (which differ depending on the first through the third thread configurations) compares the information amount stored in the memory 3 with the reference amount, and controls the priorities of the thread 2 and the thread 3. The embodiment is not limited to the example. The priority levels are H (high) level and L (low) level, and the reference amount is "1". The embodiment is not limited to the example.

If the information amount stored in the memory 2 is "0", either one of the priority controls of setting the priority of the thread 1 to H level and setting the priority of the thread 2 to L level is executed. In the first priority control, both of the priority controls are not executed at one time.

If the information amount stored in the memory 2 is "1", the priority of the thread 1 and the priority of the thread 2 are maintained at the respective current levels. If the information amount stored in the memory 2 is "2" or more, either one of the priority controls of setting the priority of the thread 1 to L level, and setting the priority of the thread 2 to H level is executed. In the first priority control, both of the priority controls are not executed at one time.

Similarly, if the information amount stored in the memory 3 is "0", either one of the priority controls of setting the priority of the thread 2 to H level, and setting the priority of the thread 3 to L level is executed. In the first priority control, both of the priority controls are not executed at one time.

If the information amount stored in the memory 3 is "1", the priority of the thread 2 and the priority of the thread 3 are maintained at their respective current levels. If the information amount stored in the memory 3 is "2" or more, either one of the priority controls of setting the priority of the thread 2 to L level, and setting the priority of the thread 3 to H level is executed. In the first priority control, both of the priority controls are not executed at one time. The embodiment is not limited to the example.

The first priority control is described referring to FIG. 13. The status (1) shown in FIG. 13 is an initial status of the information processing device before the priority control is executed. In the initial status, let it be assumed that the priorities of the thread 1, the thread 2, and the thread 3 are all set to L level, and the information amounts stored in the memory 2 and the memory 3 are both set to "0".

Then, if in the status (2), the thread 1 executes an operation of writing a processing result into the memory 2, the information amount stored in the memory 2 is changed to "1", and the information amount stored in the memory 3 is kept to "0". Then, the priority of the thread 2 is changed from L level to H level according to the aforementioned priority control, since the information amount stored in the memory 3 is "0".

Then, if in the status (3), the thread 1 executes an operation of writing a processing result into the memory 2 again, the information amount stored in the memory 2 is changed to "2", and the information amount stored in the memory 3 is kept to "0". In this status, the priorities of the threads 1 through 3 are not changed according to the aforementioned priority control. Then, if in the status (4), the thread 2 whose priority has been changed to H level executes an operation of reading information from the memory 2, the information amount stored in the memory 2 is changed to "1", and the information amount in the memory 3 is kept to "0". In this status, the priorities of the threads 1 through 3 are not changed according to the aforementioned priority control. Then, if in the status (5), the thread 2 whose priority is kept to H level executes an operation of writing a processing result into the memory 3, the information amount stored in the memory 2 is kept to "1", and the information amount stored in the memory 3 is changed to "1" . In this status, the priorities of the threads 1 through 3 are not changed according to the aforementioned priority control.

Then, if in the status (6), the thread 2 whose priority is kept to H level executes an operation of reading information from the memory 2 again, the information amount stored in the memory 2 is changed to "0", and the information amount stored in the memory 3 is kept to "1". Then, the priority of the thread 1 is changed from L level to H level according to the aforementioned priority control, since the information amount stored in the memory 2 is "0".

Then, in the status (7), although the priorities of the thread 1 and the thread 2 are both set to H level, the information amount stored in the memory 2 is set to "0". Accordingly, the thread 2 is incapable of reading information from the memory 2. Thus, in the status (7), neither information reading nor information writing is executed. In this status, the priority of the thread 2 is changed from H level to L level according to the aforementioned priority control, since the information amount stored in the memory 2 is set to "0". In the first priority control, the priority control in the status (6) and the priority control in the status (7) are not executed concurrently, but are executed sequentially. However, the order of the priority control in the status (6) and the priority control in the status (7) may be unfixed.

Then, if in the status (8), the thread 1 whose priority is set to H level executes an operation of writing a processing result into the memory 2, the information amount stored in the memory 2 is changed to "1", and the information amount stored in the memory 3 is kept to "1". In this status, the priorities of the threads 1 through 3 are not changed according to the aforementioned priority control. Then, if in the status (9) the thread 1 whose priority is kept to H level executes an operation of writing a processing result into the memory 2 again, the information amount stored in the memory 2 is changed to "2", and the information amount stored in the memory 3 is kept to "1". Then, the priority of the thread 1 is changed from H level to L level according to the aforementioned priority control, since the information amount stored in the memory 2 is set to "2".

Then, if in the status (10), the thread 2 executes an operation of reading information from the memory 2, the information amount stored in the memory 2 is changed to "1", and the information amount stored in the memory 3 is kept to "1". In this status, the priorities of the threads 1 through 3 are not changed according to the aforementioned priority control. Then, if in the status (11), the thread 2 executes an operation of writing a processing result into the memory 3, the information stored in the memory 2 is kept to "1", and the information amount stored in the memory 3 is changed to "2". Then, the priority of the thread 3 is changed from L level to H level according to the aforementioned priority control, since the information amount stored in the memory 3 is set to "2".

If in the status (12), the thread 3 whose priority is set to H level executes an operation of reading information from the memory 3, the information amount stored in the memory 2 is kept to "1", and the information amount stored in the memory 3 is changed to "1". In this status, the priorities of the threads are not changed according to the aforementioned priority control. If in the final status (13), the thread 3 whose priority is kept to H level executes an operation of reading information from the memory 3 again, the information amount stored in the memory 2 is kept to "1", and the information amount stored in the memory 3 is changed to "0". Then, the priority of the thread 2 is changed from L level to H level according to the aforementioned priority control, since the information amount stored in the memory 3 is set to "0".

In the first priority control shown in FIG. 13, the priority control is simplified. Accordingly, not to mention reduction of control overhead or a load, optimization of a load balance with respect to the entirety of the processing system can be realized, without overview control of the system, by merely executing the priority control with a very light load. Specifically, according to the first priority control, the respective priority control operations compare the information amount stored in the corresponding memory with the reference amount, and execute an operation of maintaining or changing the priority of either one of the thread of writing information into the memory and the thread of reading information from the memory.

In this embodiment, in the case where there are provided threads whose priorities are identical to each other, the threads having the same priority are executed by a round-robin method.

Also, in the embodiment, as shown in FIGS. 9 and 10, the priority control concerning the thread including the writing operation to be executed in information writing, and the priority control concerning the thread including the reading operation to be executed in information reading are performed individually. Alternatively, the priority of an input thread which has executed an operation of inputting information, and the priority of an output thread which has executed an operation of outputting information may be controlled in information writing and information reading.

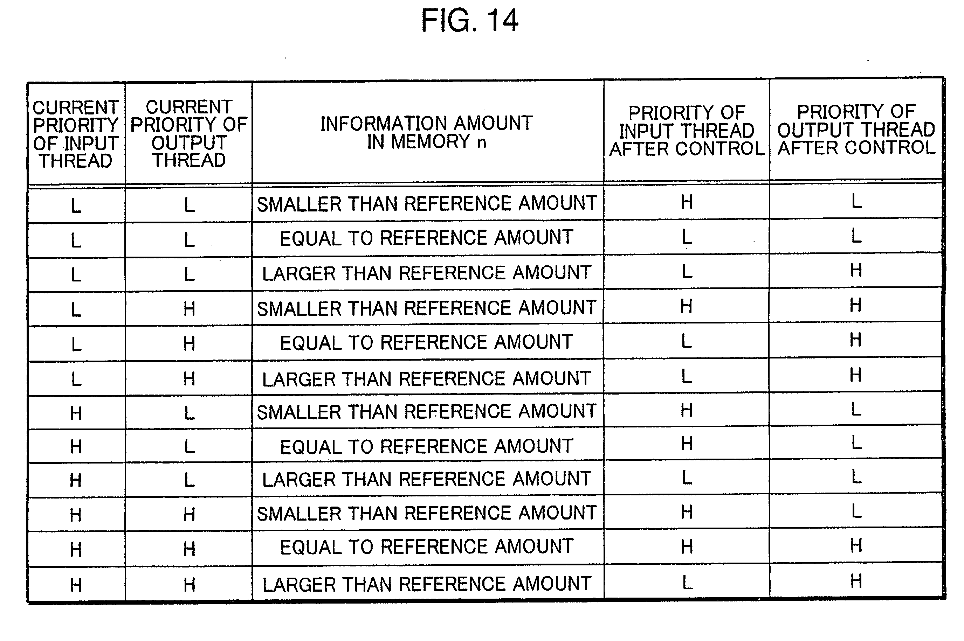

FIG. 14 is a chart showing the contents of a priority control operation to be executed with respect to the input thread and the output thread in information writing and information reading. As shown in FIG. 14, for instance, in the case where the priority of the input thread is set to L level, the priority of the output thread is set to L level, and the information amount stored in the memory n is smaller than the reference amount, the priority of the input thread is changed to H level, and the priority of the output thread is maintained to L level.

In this way, in the case where information is written and information is read, the priorities of both of the thread which has executed a writing operation i.e. the input thread, and the thread which has executed a reading operation i.e. the output thread are controlled, in place of controlling the priority of the thread that has executed the writing operation and the reading operation. This enables to control the information amount stored in the memory provided between the two threads to be executed sequentially in an optimal condition, thereby preventing information overflow and information underflow in the memory.

Further, as shown in FIG. 14, since merely the priority of either one of the input thread which has executed a writing operation and the output thread which has executed a reading operation is changed by the one-time priority control operation, control overhead resulting from a system call can be suppressed to minimum. In the case where the priorities of both of the input thread and the output thread are changed, an operation of changing the priority of the other one of the input thread and the output thread is additionally required because merely the priority of one of the threads is changed by the one-time priority control operation.

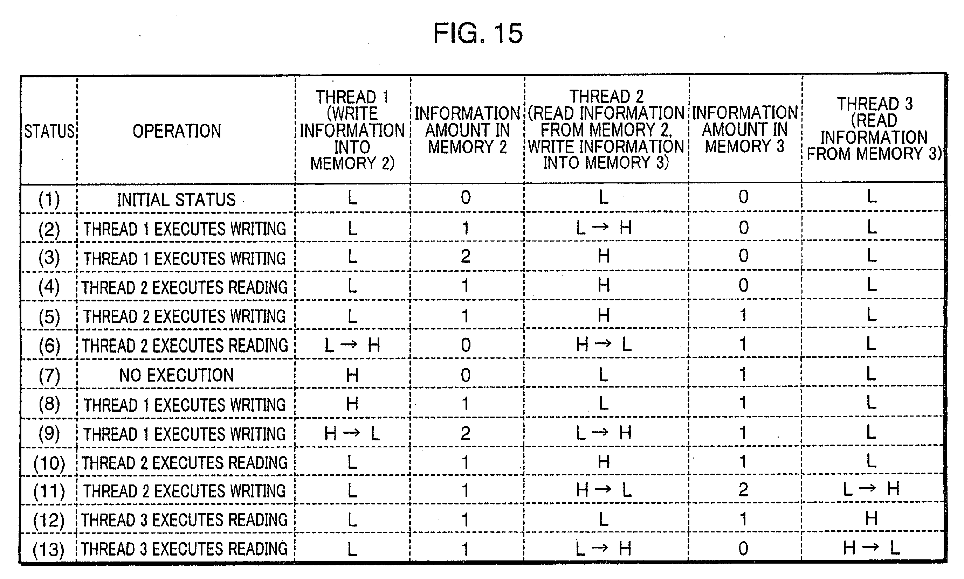

Next, the second priority control is described. FIG. 15 is a chart showing the second priority control to be executed in accordance with the contents of the priority control operation shown in FIGS. 9 and 10. Similarly to the first priority control, the second priority control is executed in accordance with the priority control charts shown in FIGS. 9 and 10.

In the second priority control, the priorities of two or more threads can be changed at one time in accordance with the control charts shown in FIGS. 9 and 10 in response to a one-time comparison between the information amount stored in the memory with the reference amount to be executed by the priority control operation. Accordingly, a system call for changing the priority may be requested twice or more, which may increase control overhead resulting from a system call. However, a more desirable priority status can be achieved by the one-time comparison between the information amount stored in the memory with the reference amount.

In the second priority control, the priority levels are H (high) level and L (low) level, and the reference amount is "1". The embodiment is not limited to the example.

If the information amount stored in the memory 2 is "0", the priority controls of setting the priority of the thread 1 to H level and setting the priority of the thread 2 to L level are executed simultaneously. In the second priority control, the priority controls of the two threads 1 and 2 are executed at one time.

If the information amount stored in the memory 2 is "1", the priority of the thread 1 and the priority of the thread 2 are maintained at the respective current levels. If the information amount stored in the memory 2 is "2" or more, the priority controls of setting the priority of the thread 1 to L level, and setting the priority of the thread 2 to H level are simultaneously executed. In the second priority control, the priority controls of the two threads 1 and 2 are executed at one time.

Similarly, if the information amount stored in the memory 3 is "0", the priority controls of setting the priority of the thread 2 to H level, and setting the priority of the thread 3 to L level are simultaneously executed. In the second priority control, the priority controls of the two threads 2 and 3 are executed at one time.

If the information amount stored in the memory 3 is "1", the priority of the thread 2 and the priority of the thread 3 are maintained at their respective current levels. If the information amount stored in the memory 3 is "2" or more, the priority controls of setting the priority of the thread 2 to L level, and setting the priority of the thread 3 to H level are simultaneously executed. In the second priority control, the priority controls of the two threads 2 and 3 are executed at one time. The embodiment is not limited to the example.

In the second priority control, the priorities of two or more threads are controlled by a one-time comparison between the information amount stored in the memory and the reference amount to be executed by one priority control operation. Accordingly, the second priority control is executable in the first thread configuration shown in FIG. 6 and in the third thread configuration shown in FIG. 8, but cannot be executed in the second thread configuration shown in FIG. 7.

The second priority control is described referring to FIG. 15. The status (1) shown in FIG. 15 is an initial status of the information processing device before the priority control is executed. In the initial status, let it be assumed that the priorities of the thread 1, the thread 2, and the thread 3 are all set to L level, and the information amounts stored in the memory 2 and the memory 3 are both set to "0".

Then, if in the status (2), the thread 1 executes an operation of writing a processing result into the memory 2, the information amount stored in the memory 2 is changed to "1", and the information amount stored in the memory 3 is kept to "0". Then, the priority of the thread 2 is changed from L level to H level according to the aforementioned priority control, since the information amount stored in the memory 3 is "0".

Then, if in the status (3), the thread 1 executes an operation of writing a processing result into the memory 2 again, the information amount stored in the memory 2 is changed to "2", and the information amount stored in the memory 3 is kept to "0". In this status, the priorities of the threads are not changed according to the aforementioned priority control. Then, if in the status (4), the thread 2 whose priority has been changed to H level executes an operation of reading information from the memory 2, the information amount stored in the memory 2 is changed to "1", and the information amount stored in the memory 3 is kept to "0". In this status, the priorities of the threads 1 through 3 are not changed according to the aforementioned priority control. Then, if in the status (5), the thread 2 whose priority is kept to H level executes an operation of writing a processing result into the memory 3, the information amount stored in the memory 2 is kept to "1", and the information amount stored in the memory 3 is changed to "1" . In this status, the priorities of the threads 1 through 3 are not changed according to the aforementioned priority control.

Then, if in the status (6), the thread 2 whose priority is kept to H level executes an operation of reading information from the memory 2 again, the information amount stored in the memory 2 is changed to "0", and the information amount stored in the memory 3 is kept to "1". Then, the priority of the thread 1 is changed from L level to H level, and simultaneously, the priority of the thread 2 is changed from H level to L level according to the aforementioned priority control, since the information amount stored in the memory 2 is "0". Thus, unlike the first priority control, in the second priority control, the priorities of the plural threads are changed by a one-time priority control operation. Accordingly, a more desirable priority status can be achieved.

Then, in the status (7), the priority of the thread 1 is set to H level, and the priorities of the thread 2 and the thread 3 are both set to L level, which means that the information processing device is controlled in an optimal priority status. Accordingly, neither information writing nor information reading is executed. In this status, the priorities of the threads 1 through 3 are not changed.

Then, if in the status (8), the thread 1 whose priority is set to H level executes an operation of writing a processing result into the memory 2, the information amount stored in the memory 2 is changed to "1", and the information amount stored in the memory 3 is kept to "1". In this status, the priorities of the threads 1 through 3 are not changed according to the aforementioned priority control. Then, if in the status (9), the thread 1 whose priority is kept to H level executes an operation of writing a processing result into the memory 2 again, the information amount stored in the memory 2 is changed to "2", and the information amount stored in the memory 3 is kept to "1". Then, the priority of the thread 1 is changed from H level to L level, and simultaneously, the priority of the thread 2 is changed from L level to H level according to the aforementioned priority control, since the information amount stored in the memory 2 is set to "2".

Then, if in the status (10), the thread 2 whose priority is set to H level executes an operation of reading information from the memory 2, the information amount stored in the memory 2 is changed to "1", and the information amount stored in the memory 3 is kept to "1". In this status, the priorities of the threads 1 through 3 are not changed according to the aforementioned priority control. Then, if in the status (11), the thread 2 whose priority is kept to H level executes an operation of writing a processing result into the memory 3, the information stored in the memory 2 is kept to "1", and the information amount stored in the memory 3 is changed to "2". Then, the priority of the thread 2 is changed from H level to L level, and simultaneously, the priority of the thread 3 is changed from L level to H level according to the aforementioned priority control, since the information amount stored in the memory 3 is set to "2".

Then, if in the status (12), the thread 3 whose priority is set to H level executes an operation of reading information from the memory 3, the information amount stored in the memory 2 is kept to "1", and the information amount stored in the memory 3 is changed to "1". In this status, the priorities of the threads 1 through 3 are not changed according to the aforementioned priority control. If in the final status (13), the thread 3 whose priority is kept to H level executes an operation of reading information from the memory 3 again, the information amount stored in the memory 2 is kept to "1", and the information amount stored in the memory 3 is changed to "0". Then, the priority of the thread 2 is changed from L level to H level, and simultaneously, the priority of the thread 3 is changed from H level to L level according to the aforementioned priority control, since the information amount stored in the memory 3 is "0".

In the second priority control shown in FIG. 15, optimization of a load balance with respect to the entirety of the processing system can be realized, without overview control of the processing system, by merely executing the priority control with a very light load. Specifically, according to the second priority control, the respective priority control operations compare the information amount stored in the corresponding memory with the reference amount, and execute an operation of maintaining or changing the priority order of the thread of writing information into the memory and the thread of reading information from the memory. In addition to the above, a more desirable priority status can be achieved by the one-time priority control operation.

In the embodiment, as shown in FIGS. 9 and 10, the priority control of the thread including the writing operation to be executed in information writing, and the priority control of the thread including the reading operation to be executed in information reading are performed individually. Alternatively, the priority of the input thread which has executed an operation of inputting information, and the priority of the output thread which has executed an operation of outputting information may be controlled in information writing and information reading.

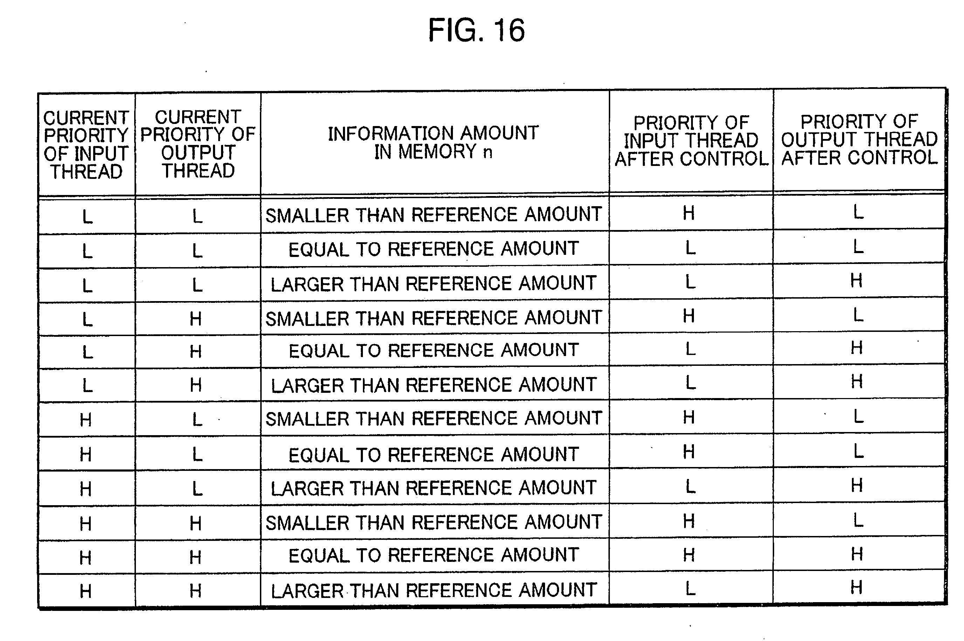

FIG. 16 is a chart showing the contents of a priority control operation to be executed with respect to the input thread and the output thread in information writing and information reading. As shown in FIG. 16, for instance, in the case where the priority of the input thread is set to L level, the priority of the output thread is set to L level, and the information amount stored in the memory n is smaller than the reference amount, the priority of the input thread is changed to H level, and the priority of the output thread is maintained to L level.

Further, in the case where the priority of the input thread is set to L level, the priority of the output thread is set to H level, and the information amount stored in the memory n is smaller than the reference amount, the priority of the input thread is changed to H level, and the priority of the output thread is maintained to L level.

In this way, in the case where information is written and information is read, the priorities of both of the threads i.e. the input thread which has executed a writing operation, and the output thread which has executed a reading operation are controlled, in place of controlling the priority of the thread which has executed the writing operation and the reading operation. This enables to control the information amount stored in the memory provided between the two threads to be executed sequentially in an optimal condition, and to prevent information overflow and information underflow in the memory.

Further, as shown in FIG. 16, since the priorities of both of the input thread which has executed a writing operation and the output thread which has executed a reading operation are changed by a one-time priority control operation, the priority of the entirety of the processing system can be changed to an optimal condition by the one-time priority control operation, although control overhead resulting from a system call may be increased.

Next, the third priority control executable by the respective control threads in all the configurations i.e. the first hardware configuration, the second hardware configuration, the third hardware configuration, the first thread configuration, the second thread configuration, and the third thread configuration is described.

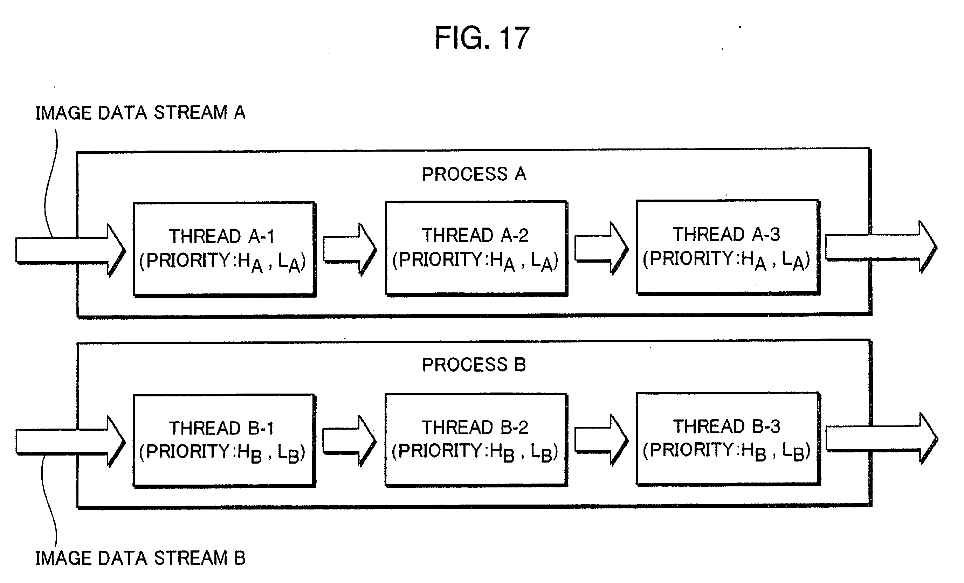

FIG. 17 is a diagram showing a configuration on processes and threads to which the third priority control is applied. In the first priority control and the second priority control, one image data stream is inputted, and three threads sequentially execute operations concerning the one image data stream.

On the other hand, in the third priority control, two image data streams A and B are inputted, and two processes A and B execute a series of threads individually with respect to the two image data streams A and B in parallel to each other. Specifically, the process A is constituted of three threads to be executed sequentially i.e. a thread A-1, a thread A-2, and a thread A-3. The process B is constituted of three threads to be executed sequentially i.e. a thread B-1, a thread B-2, and a thread B-3. This is merely an example to describe the feature of the third priority control in a simplified manner. The embodiment is not limited to the example.

The third priority control shown in FIG. 17 may be executed in any one of the first through the third hardware configurations, or may be executed in any one of the first through the third thread configurations. Further alternatively, the third priority control may be executed in a hardware configuration other than the first through the third hardware configurations, or a thread configuration other than the first through the third thread configurations.

In the third priority control, each of the thread A-1, the thread A-2, and the thread A-3 included in the process A for executing operations concerning the image data stream A has priority level values (H_{A}, L_{A}) in two-steps. Similarly, each of the thread B-1, the thread B-2, and the thread B-3 included in the process B for executing operations concerning the image data stream B has priority level values (H_{B}, L_{B}) in two-steps. Actual priority level values are set to: H_{A}=4, L_{A}=3, H_{B}=2, and L_{B}=1 .

If the information amounts stored in memories (not shown in FIG. 17) from which the respective threads A-1, A-2, and A-3 read information exceed the predetermined reference amount, the higher priority level values H_{A} of the threads A-1, A-2, and A-3 are set to: H_{A}=4. On the other hand, if the information amounts stored in the memories from which the respective threads A-1, A-2, and A-3 read information are smaller than the reference amount, the lower priority level values L_{A} of the threads A-1, A-2, and A-3 are set to: L_{A}=3. Also, if the information amounts stored in the memories into which the respective threads A-1, A-2, and A-3 write information exceed the reference amount, the lower priority level values L_{A} of the threads A-1, A-2, and A-3 are set to: L_{A}=3. On the other hand, if the information amounts stored in the memories into which the respective threads A-1, A-2, and A-3 write information are smaller than the reference amount, the higher priority level values H_{A} of the threads A-1, A-2, and A-3 are set to: H_{A}=4.

Similarly, if the information amounts stored in the memories (not shown in FIG. 17) from which the respective threads B-1, B-2, and B-3 read information exceed the predetermined reference amount, the higher priority level values H_{B} of the threads B-1, B-2, and B-3 are set to: H_{B}=2. On the other hand, if the information amounts stored in the memories from which the respective threads B-1, B-2, and B-3 read information are smaller than the reference amount, the lower priority level values L_{B} of the threads B-1, B-2, and B-3 are set to: L_{B}=1. Also, if the information amounts stored in the memories into which the respective threads B-1, B-2, and B-3 write information exceed the reference amount, the lower priority level values L_{B} of the threads B-1, B-2, and B-3 are set to: L_{B}=1. On the other hand, if the information amounts stored in the memories into which the respective threads B-1, B-2, and B-3 write information are smaller than the reference amount, the higher priority level values H_{B} of the threads B-1, B-2, and B-3 are set to: H_{B}=2.

By setting the priority level values H_{A}, L_{A}, H_{B}, and L_{B} to satisfy the requirement: H_{A}>L_{A}>H_{B}>L_{B}, even if the priorities of the threads A-1, A-2, and A-3 are set to L level, the priorities of the threads A-1, A-2, and A-3 included in the process A are constantly set higher than the priorities of the threads B-1, B-2, and B-3 included in the process B, thereby allowing the threads A-1, A-2, and A-3 to execute their operations prior to the operations of the threads B-1, B-2, and B-3. Thus, the information amounts stored in the memories to be used by the threads B-1, B-2, and B-3 included in the process B of executing the operations concerning the image data stream B are controlled to be approximated to the reference amount, after the information amounts stored in the memories to be used by the threads A-1, A-2, and A-3 included in the process A of executing the operations concerning the image data stream A are set to the reference amount. In other words, the operations concerning the image data stream A are optimized prior to the operations concerning the image data stream B.

Changing the priority level values depending on the kind of image data stream to be processed is more effective in the case where all or a part of processes of executing the operations concerning the different image data streams are identical. For instance, the above arrangement is more advantageous in the first hardware configuration, wherein the hardware such as the single CPU 103 executes the operations, or in the third hardware configuration, wherein the hardware such as the single storage 304 is commonly used for executing the operations, or in the third thread configuration, wherein the operations are executed by a single control thread. The embodiment is not limited to the foregoing examples.

Alternatively, the actual priority level values to be allocated to the threads under the same or similar system environment as mentioned above may be defined: e.g. H_{A}=4, L_{A}=2, H_{B}=3, and L_{B}=1.

In the modification, the priority level values are set to satisfy the requirement: e.g. H_{A}>H_{B}>L_{A}>L_{B}. In this case, the process A is executed prior to the process B, concerning the same priority levels e.g. H_{A} and H_{B}, or L_{A} and L_{B}. However, the thread having a higher priority level H_{A} (or H_{B}) is executed prior to the thread having a lower priority level L_{A} (or L_{B}), concerning the different priority levels e.g. H_{A} and L_{B}, or H_{B} and L_{A}.

Accordingly, in the above modification, the control can be performed in such a manner that the information amounts stored in the memories to be used by the threads B-1, B-2, and B-3 included in the process B of executing the operations concerning the image data stream B can be approximated to the reference amount, while the information amounts stored in the memories to be used by the threads A-1, A-2, and A-3 included in the process A of executing the operations concerning the image data stream A can be approximated to the reference amount. The priority control of approximating the information amounts stored in the memories to be used by the threads included in the processes to the reference amount can be executed in such a manner that the process A has a higher priority than the process B.

The foregoing embodiment and/or modifications primarily include the inventions having the following arrangements.

An information processing device according to an aspect of the invention comprises: a storage for storing information therein; a thread executor for executing a thread including a writing operation of writing information into the storage, and a reading operation of reading the information from the storage; and a priority controller for controlling a priority of the thread based on an information amount stored in the storage in at least one of conditions when the writing operation has been executed by the thread executor, and when the reading operation has been executed by the thread executor.

An information processing method according to another aspect of the invention comprises: a thread execution step of executing a thread including a writing operation of writing information into a storage, and a reading operation of reading the information from the storage; and a priority control step of controlling a priority of the thread based on an information amount stored in the storage in at least one of conditions when the writing operation has been executed in the thread execution step, and when the reading operation has been executed in the thread execution step.

A computer-readable recording medium recorded with an information processing program according to yet another aspect of the invention is recorded with an information processing program which causes a computer to function as: a storage for storing information therein; a thread executor for executing a thread including a writing operation of writing information into the storage, and a reading operation of reading the information from the storage; and a priority controller for controlling a priority of the thread based on an information amount stored in the storage in at least one of conditions when the writing operation has been executed by the thread executor, and when the reading operation has been executed by the thread executor.

In the above arrangements, the priority of the thread is controlled based on the information amount stored in the storage in at least one of the conditions when the writing operation has been executed, and when the reading operation has been executed.

The above arrangements enable to control the priorities of the threads so that the respective threads optimize the information amount stored in a storage in an autonomous distributed manner, and to optimize the processing load of the entirety of a processing system without control overhead.

Preferably, in the information processing device, the thread executor may execute a plurality of sequential threads, the writing operation and the reading operation may be respectively included in the threads different from each other, and the storage may include a plurality of storages each provided between the threads to be executed sequentially.

According to the above arrangement, in a pipeline processing system configured to execute the following operations by causing one of the threads to write a processing result into the storage and by causing the other one of the threads to read the processing result from the storage, the information amount stored in the storage to be used by the threads to be executed sequentially in the pipeline processing system in communicating information can be optimized, thereby more efficiently optimizing the processing load of the entirety of the processing system.

Preferably, in the information processing device, the thread executor may execute the first thread including the writing operation, and execute the second thread including the reading operation, and the priority controller may compare the information amount stored in the storage with a predetermined reference amount, execute at least one of an operation of raising the priority of the first thread and an operation of lowering the priority of the second thread, if the information amount is smaller than the reference amount, execute at least one of an operation of lowering the priority of the first thread and an operation of raising the priority of the second thread, if the information amount is larger than the reference amount, and execute an operation of maintaining the current priority of the first thread and an operation of maintaining the current priority of the second thread, if the information amount is equal to the reference amount.

In the above arrangement, if the information amount stored in the storage is smaller than the reference amount, in other words, the information amount stored in the storage is insufficient, execution of the thread of writing information is prioritized to increase the information amount stored in the storage. If the information amount stored in the storage is larger than the reference amount, in other words, the information amount of the storage is unduly large, execution of the thread of reading information is prioritized to decrease the information amount stored in the storage. If the information amount is equal to the reference amount, in other words, the information amount stored in the storage is proper, the current priorities of the thread of writing information and the thread of reading information are maintained to keep the information amount stored in the storage.

Thus, the priority of the thread of writing information and the priority of the thread of reading information are controlled to keep the information amount stored in the storage to a proper amount. This enables to controllably keep the information amount stored in the storage to a proper amount, while suppressing control overhead to minimum.

Preferably, in the information processing device, the thread executor may execute the first thread including the writing operation, and execute the second thread including the reading operation, and the priority controller may compare the information amount stored in the storage with a predetermined first reference amount, and execute at least one of an operation of raising the priority of the first thread and an operation of lowering the priority of the second thread, if the information amount is smaller than the first reference amount, and the priority controller may compare the information amount with a predetermined second reference amount larger than the first reference amount, and execute at least one of an operation of lowering the priority of the first thread and an operation of raising the priority of the second thread, if the information amount is larger than the second reference amount.

In the above arrangement, if the information amount stored in the storage is smaller than the first reference amount, execution of the thread of writing information is prioritized. If the information amount stored in the storage is larger than the second reference amount, execution of the thread of reading information is prioritized.

In the above arrangement, a so-called hysteresis characteristic is provided to changeover control of the priority. This enables to execute stable control capable of maintaining a high (or low) priority for a predetermined period, once the priority is set high (or low).

Preferably, in the information processing device, the thread executor may execute a first process, and a second process different from the first process, the first process and the second process may include a thread including a writing operation and a thread including a reading operation, respectively, and the priority controller may set the priority of the thread included in the first process higher than the priority of the thread included in the second process, if a priority rank of the first process is higher than a priority rank of the second process.

In the above arrangement, if the priority rank of the first process is higher than the priority rank of the second process, the priority of the thread included in the first process is set higher than the priority of the thread included in the second process.

Thus, the priority of the first process is set higher than the priority of the second process, which enables to prioritize execution of the operation to be executed by the first process over execution of the operation to be executed by the second process.

Preferably, in the information processing device, the thread executor may execute a first process, and a second process different from the first process, the first process and the second process may include a thread including a writing operation and a thread including a reading operation, respectively, the priority may include a first priority level, and a second priority level higher than the first priority level, and the priority controller may set the first priority level of the thread included in the first process higher than the first priority level of the thread included in the second process, and may set the second priority level of the thread included in the first process higher than the second priority level of the thread included in the second process, if a priority rank of the first process is higher than a priority rank of the second process.

In the above arrangement, if the priority rank of the first process is higher than the priority rank of the second process, the first priority level of the thread included in the first process is set higher than the first priority level of the thread included in the second process, and the second priority level of the thread included in the first process is set higher than the second priority level of the thread included in the second process.

Thus, execution of the operation to be executed by the first process is prioritized over execution of the operation to be executed by the second process. This enables to set the information amount stored in the storage to be used in the second process to a proper amount, while setting the information amount stored in the storage to be used in the first process to a proper amount.

Preferably, in the information processing device, the plurality of threads may include the first thread of executing a first imaging operation, and the second thread of executing a second imaging operation with respect to a processing result of the first imaging operation.

According to the above arrangement, in a processing system of performing a pipeline operation by dividing a complex imaging operation into simplified imaging operations and by causing plural threads to execute the simplified imaging operations step-wise, the priorities of the threads can be finely determined depending on a degree of load of the imaging operations to be executed by the individual threads. Further, since the priority control of the respective threads can be executed in an autonomous distributed manner, the processing load of the entirety of the processing system can be optimized without control overhead.

Preferably, in the information processing device, the priority may include a first priority level, and a second priority level higher than the first priority level.

In the above arrangement, the priority includes two values i.e. the first priority level and the second priority level higher than the first priority level. Accordingly, the priority control can be executed by maintaining or changing the priority of either one of the thread of writing information into the storage and the thread of reading information from the storage. This enables to reduce the processing load concerning the priority control, and to optimize the load balance of the entirety of the processing system, without performing control while monitoring the entirety of the system.

The information processing device, the information processing method, and the computer-readable recording medium recorded with the information processing program of the invention are capable of controlling the priorities of the threads so that the respective threads optimize the information amount stored in the storage in an autonomous distributed manner. Thus, the invention is useful as an information processing device, an information processing method, and a computer-readable information recording medium recorded with an information processing program that are operative to execute the plural threads concurrently or time-sharingly, store an execution result of one of the threads into the storage, and execute the other one of the threads by using the execution result stored in the storage.

Although the invention has been appropriately and fully described by way of examples with reference to the accompanying drawings, it is to be understood that various changes and/or modifications will be apparent to those skilled in the art. Therefore, unless otherwise such changes and/or modifications depart from the scope of the present invention hereinafter defined, they should be construed as being included therein.

## Claims

1. An information processing device (200), comprising:
a storage for storing information therein;
a thread executor in a central processing unit for executing a thread including a writing operation of writing information into the storage, and a thread including a reading operation of reading the information from the storage; and
a priority controller for controlling a priority of the thread based on an information amount stored in the storage in at least one of conditions when the writing operation has been executed by the thread executor, and when the reading operation has been executed by the thread executor; and
the writing operation and the reading operation are respectively included in threads different from each other, and
the storage includes a plurality of storages (214, 224, 234) each provided between the threads to be executed sequentially and storing information which is written by execution of previous thread and read by execution of next thread,
**characterized in that**
a plurality of sequential threads are executed by a plurality of central processing units (213, 223, 233), and
the plurality of central processing units (213, 223, 233) include: a first central processing unit (231) for executing a first thread including the writing operation; and a second central processing unit (223) for executing a second thread including the reading operation; and
the priority controller compares the information amount stored in one of the plurality of storages with a predetermined reference amount the information amount being incremented by one when a writing operation is performed into the corresponding one of the plurality of storages and being decremented by one when a reading operation is performed from said corresponding one of the plurality of storages and executes an operation of raising the priority of the second thread to be higher than the priority of the first thread, if the information amount stored in said one of the plurality of storages is larger than the reference amount.

2. The information processing device (200) according to claim 1, wherein
the priority controller executes an operation of raising the priority of the first thread to be higher than the priority of the second thread, if the information amount is smaller than the reference amount, and executes an operation of maintaining the current priority of the first thread and an operation of maintaining the current priority of the second thread, if the information amount is equal to the reference amount.

3. The information processing device (200) according to claim 1, wherein
the priority controller compares the information amount with other reference amount which is smaller than the reference amount, and executes an operation of raising the priority of the first thread to be higher than the priority of the second thread, if the information amount is smaller than said other reference amount.

4. The information processing device (200) according to claim 1, wherein
the plurality of central processing units execute a first process, and a second process different from the first process,
the first process and the second process include a thread including a writing operation and a thread including a reading operation, respectively, and
the priority controller sets the priority of the thread included in the first process higher than the priority of the thread included in the second process, if a priority rank of the first process is higher than a priority rank of the second process.

5. The information processing device (200) according to claim 1, wherein
the plurality of central processing units execute a first process, and a second process different from the first process,
the first process and the second process include a thread including a writing operation and a thread including a reading operation, respectively,
the priority includes a first priority level, and a second priority level higher than the first priority level, and
the priority controller sets the first priority level of the thread included in the first process higher than the first priority level of the thread included in the second process, and sets the second priority level of the thread included in the first process higher than the second priority level of the thread included in the second process, if a priority rank of the first process is higher than a priority rank of the second process.

6. The information processing device (200) according to claim 2, wherein
the plurality of threads include the first thread of executing a first imaging operation, and the second thread of executing a second imaging operation with respect to a processing result of the first imaging operation.

7. The information processing device (200) according to claim 1, wherein
the priority includes a first priority level, and a second priority level higher than the first priority level.

8. An information processing method, comprising:
a thread execution step of executing a thread including a writing operation of writing information into a storage, and a thread including a reading operation of reading the information from the storage; and
a priority control step of controlling a priority of the thread based on an information amount stored in the storage in at least one of conditions when the writing operation has been executed in the thread execution step, and when the reading operation has been executed in the thread execution step, and
the writing operation and the reading operation are respectively included in threads different from each other, and
the storage includes a plurality of storages each provided between the threads to be executed sequentially and storing information which is written by execution of previous thread and read by execution of next thread,
**characterized in that**
the thread execution step includes a plurality of thread execution steps each performed on one of a plurality of central processing units for executing a plurality of sequential threads, and
the plurality of thread execution steps include: a first thread execution step for executing a first thread including the writing operation; and a second thread execution step for executing a second thread including the reading operation; and
the priority control step compares the information amount stored in one of the plurality of storages with a predetermined reference amount and executes an operation of raising the priority of the second thread to b higher than the priority of the first thread, if the information amount stored in said one of the plurality of storages is larger than the reference amount.

9. A computer-readable recording medium recorded with an information processing program which causes a computer to function as:
a storage for storing information therein;
a thread executor in a central processing unit for executing a thread including a writing operation of writing information into the storage, an a thread including a reading operation of reading the information from the storage; and
a priority controller for controlling a priority of the thread based on an information amount stored in the storage in at least one of conditions when the writing operation has been executed by the thread executor, and when the reading operation has been executed by the thread executor, and
the writing operation and the reading operation are respectively included in threads different from each other, and
the storage includes a plurality of storages (214, 224, 234) each provided between the threads to be executed sequentially and storing information which is written by execution of previous thread and read by execution of next thread,
**characterized in that**
a plurality of sequential threads are executed by a plurality of central processing units (213, 223, 233), and
the plurality of central processing units (213, 223, 233) include: a first central processing unit (213) for executing a first thread including the writing operation; and a second central processing unit (223) for executing a second thread including the reading operation, and
the priority controller compares the information amount stored in one of the plurality of storages with a predetermined reference amount the information amount being incremented by one when a writing operation is performed into the corresponding one of the plurality of storages and being decremented by one when a reading operation is performed from said corresponding one of the plurality of storages and executes an operation of raising the priority of the second thread to be higher than the priority of the first thread, if the information amount stored in said one of the plurality of storages is larger than the reference amount.

## Patentansprüche

1. Ein Informationsverarbeitungsgerät (200), aufweisend:
einen Speicher, um darin Informationen zu speichern;
einen Thread-Ausführer in einer zentralen Prozessoreinheit zum Ausführen eines Threads, enthaltend eine Schreiboperation des Schreibens von Informationen in den Speicher, und einen Thread enthaltend eine Leseoperation des Lesens der Information aus dem Speicher; und
ein Prioritäts-Kontrollglied zum Regeln einer Priorität des Threads basierend auf einer Informationsmenge, die in dem Speicher gespeichert ist, in zumindest einer von Bedingungen wenn die Schreiboperation von dem Thread-Ausführer ausgeführt wurde, und wenn die Leseoperation von dem Thread-Ausführer ausgeführt wurde; und
die Schreiboperation und die Leseoperation sind jeweils enthalten in voneinander verschiedenen Threads, und
der Speicher enthält eine Vielzahl von Speichern (214, 224, 234), jeder angeordnet zwischen den sequenziell auszuführenden Threads und Informationen speichernd, die bei der Ausführung des vorhergehenden Threads geschrieben wird und bei der Ausführung des nächsten Threads gelesen wird,
**dadurch gekennzeichnet dass**
eine Vielzahl von sequenziellen Threads ausgeführt wird von einer Vielzahl von zentralen Prozessoreinheiten (213, 223, 233), und
die Vielzahl von zentralen Prozessoreinheiten (213, 223, 233) enthalten: eine erste zentrale Prozessoreinheit (213) zum Ausführen des ersten Threads enthaltend die Schreiboperation; und eine zweite zentrale Prozessoreinheit (223) zum Ausführen eines zweiten Threads enthaltend die Leseoperation; und
das Prioritäts-Kontrollglied vergleicht die Informationsmenge, die in einem der Vielzahl der Speicher gespeichert ist, mit einer vorgegebenen Referenzmenge, wobei die Informationsmenge um eins erhöht wird, wenn eine Schreiboperation in den zugehörigen der Vielzahl von Speichern ausgeführt wird, und um eins reduziert wird, wenn eine Leseoperation von dem zugehörigen der Vielzahl von Speichern durchgeführt wird, und führt eine Operation des Erhöhens der Priorität des zweiten Threads aus, sodass diese höher ist als die Priorität des ersten Threads, wenn die Informationsmenge, die in dem besagten der Vielzahl von Speichern gespeichert ist, größer ist als die Referenzmenge.

2. Das Informationsverarbeitungsgerät (200) nach Anspruch 1, wobei das Prioritäts-Kontrollglied eine Operation ausführt des Erhöhens der Priorität des ersten Threads, so dass diese höher ist als die Priorität des zweiten Threads, wenn die Informationsmenge kleiner ist als die Referenzmenge, und eine Operation ausführt des Beibehaltens der derzeitigen Priorität des ersten Threads und eine Operation des Beibehaltens der derzeitigen Priorität des zweiten Threads wenn die Informationsmenge gleich der Referenzmenge ist.

3. Das Informationsverarbeitungsgerät (200) nach Anspruch 1, wobei das Prioritäts-Kontrollglied die Informationsmenge vergleicht mit anderer Referenzmenge, die kleiner ist als die Referenzmenge, und eine Operation ausführt des Erhöhens der Priorität des ersten Threads, sodass diese höher ist als die Priorität des zweiten Threads, wenn die Informationsmenge kleiner ist als die besagte andere Referenzmenge.

4. Das Informationsverarbeitungsgerät (200) nach Anspruch 1, wobei
die Vielzahl von zentralen Prozessoreinheiten einen ersten Prozess ausführen und einen zweiten Prozess, der unterschiedlich ist vom ersten Prozess,
der erste Prozess und der zweite Prozess enthalten einen Thread enthaltend eine Schreiboperation beziehungsweise einen Thread enthaltend eine Leseoperation, und
das Prioritäts-Kontrollglied setzt die Priorität des Threads enthalten in dem ersten Prozess höher als die Priorität des Threads enthalten in dem zweiten Prozess wenn ein Prioritätsrang des ersten Prozesses höher ist als ein Prioritätsrang des zweiten Prozesses.

5. Das Informationsverarbeitungsgerät (200) nach Anspruch 1, wobei
die Vielzahl von zentralen Prozessoreinheiten einen ersten Prozess ausführen und einen zweiten Prozess, der unterschiedlich ist von dem ersten Prozess,
der erste Prozess und der zweite Prozess enthalten einen Thread enthaltend eine Schreiboperation beziehungsweise einen Thread enthaltend eine Leseoperation,
die Priorität enthält ein erstes Prioritätsniveau und ein zweites Prioritätsniveau, das höher ist als das erste Prioritätsniveau, und
das Prioritäts-Kontrollglied setzt das erste Prioritätsniveau des Threads enthalten in dem ersten Prozess höher als das erste Prioritätsniveau des Threads enthalten in dem zweiten Prozess, und setzt das zweite Prioritätsniveau des Threads enthalten in dem ersten Prozess höher als das zweite Prioritätsniveau des Threads enthalten in dem zweiten Prozess wenn ein Prioritätsrang des ersten Prozesses höher ist als ein Prioritätsrang des zweiten Prozesses.

6. Das Informationsverarbeitungsgerät (200) nach Anspruch 2, wobei
die Vielzahl an Threads enthalten den ersten Thread des Ausführens einer ersten Bildverarbeitungsoperation, und den zweiten Thread des Ausführens einer zweiten Bildverarbeitungsoperation mit Bezug auf ein Bearbeitungsergebnis der ersten Bildverarbeitungsoperation.

7. Das Informationsverarbeitungsgerät (200) nach Anspruch 1, wobei
die Priorität ein erstes Prioritätsniveau enthält und ein zweites Prioritätsniveau, das höher ist als das erste Prioritätsniveau.

8. Ein Informationsverarbeitungsverfahren, aufweisend:
einen Thread-Ausführungsschritt des Ausführens eines Threads enthaltend eine Schreiboperation des Schreibens von Information in einen Speicher und einen Thread enthaltend eine Leseoperation des Lesens der Information aus dem Speicher; und
einen Prioritätsregelschritt des Regelns einer Priorität des Threads basierend auf einer Informationsmenge, die in dem Speicher gespeichert ist, in zumindest einer von Bedingungen wenn die Schreiboperation in dem Thread-Ausführungsschritt ausgeführt wurde und wenn die Leseoperation in dem Thread-Ausführungsschritt ausgeführt wurde, und
die Schreiboperation und die Leseoperation sind jeweils enthalten in voneinander verschiedenen Threads, und
der Speicher enthält eine Vielzahl von Speichern, jeder angeordnet zwischen den sequenziell auszuführenden Threads und Informationen speichernd, die bei der Ausführung des vorhergehenden Threads geschrieben wird und bei der Ausführung des nächsten Threads gelesen wird,
**dadurch gekennzeichnet dass**
der Thread-Ausführungsschritt enthält eine Vielzahl von Thread-Ausführungsschritten, jeder ausgeführt in einer von einer Vielzahl von zentralen Prozessoreinheiten, zum Ausführen einer Vielzahl von sequenziellen Threads, und
die Vielzahl der Thread-Ausführungsschritte enthalten: einen ersten Thread-Ausführungsschritt zum Ausführen eines ersten Threads enthaltend die Schreiboperation; und einen zweiten Thread-Ausführungsschritt zum Ausführen eines zweiten Threads enthaltend die Leseoperation; und
der Prioritäts-Regelschritt vergleicht die Informationsmenge, die in einem der Vielzahl der Speicher gespeichert ist, mit einer vorgegebenen Referenzmenge, wobei die Informationsmenge um eins erhöht wird, wenn eine Schreiboperation in den zugehörigen der Vielzahl von Speichern ausgeführt wird, und um eins reduziert wird, wenn eine Leseoperation von dem zugehörigen der Vielzahl der Speicher durchgeführt wird, und führt eine Operation des Erhöhens der Priorität des zweiten Threads aus, sodass diese höher ist als die Priorität des ersten Threads, wenn die Informationsmenge, die in dem besagten der Vielzahl von Speichern gespeichert ist, größer ist als die Referenzmenge.

9. Ein computerlesbares Speichermedium, bespielt mit einem Informationsverarbeitungsprogramm, das den Computer dazu veranlasst zu funktionieren als:
ein Speicher, um darin Informationen zu speichern;
ein Thread-Ausführer in einer zentralen Prozessoreinheit zum Ausführen eines Threads, enthaltend eine Schreiboperation des Schreibens von Informationen in den Speicher, und einen Thread enthaltend eine Leseoperation des Lesens der Information aus dem Speicher; und
ein Prioritäts-Kontrollglied zum Regeln einer Priorität des Threads basierend auf einer Informationsmenge, die in dem Speicher gespeichert ist, in zumindest einer von Bedingungen wenn die Schreiboperation von dem Thread-Ausführer ausgeführt wurde, und wenn die Leseoperation von dem Thread-Ausführer ausgeführt wurde; und
die Schreiboperation und die Leseoperation sind jeweils enthalten in voneinander verschiedenen Threads, und
der Speicher enthält eine Vielzahl von Speichern (214, 224, 234), jeder angeordnet zwischen den sequenziell auszuführenden Threads und Informationen speichernd, die bei der Ausführung des vorhergehenden Threads geschrieben wird und bei der Ausführung des nächsten Threads gelesen wird,
**dadurch gekennzeichnet dass**
eine Vielzahl von sequenziellen Threads ausgeführt wird von einer Vielzahl von zentralen Prozessoreinheiten (213, 223, 233), und
die Vielzahl von zentralen Prozessoreinheiten (213, 223, 233) enthalten: eine erste zentrale Prozessoreinheit (213) zum Ausführen des ersten Threads enthaltend die Schreiboperation; und eine zweite zentrale Prozessoreinheit (223) zum Ausführen eines zweiten Threads enthaltend die Leseoperation; und
das Prioritäts-Kontrollglied vergleicht die Informationsmenge, die in einem der Vielzahl der Speicher gespeichert ist, mit einer vorgegebenen Referenzmenge, wobei die Informationsmenge um eins erhöht wird, wenn eine Schreiboperation in den zugehörigen der Vielzahl von Speichern ausgeführt wird, und um eins reduziert wird, wenn eine Leseoperation von dem zugehörigen der Vielzahl von Speichern durchgeführt wird, und führt eine Operation des Erhöhens der Priorität des zweiten Threads aus, sodass diese höher ist als die Priorität des ersten Threads, wenn die Informationsmenge, die in dem besagten der Vielzahl von Speichern gespeichert ist, größer ist als die Referenzmenge.

## Revendications

1. Dispositif de traitement d'informations (200), comprenant :
un dispositif de stockage pour y stocker des informations ;
un exécuteur de filière dans une unité de traitement centrale pour exécuter une filière comprenant une opération d'écriture pour écrire des informations dans le dispositif de stockage, et une filière comprenant une opération de lecture pour lire les informations à partir du dispositif de stockage ; et
un dispositif de commande de priorité pour commander une priorité de la filière sur la base d'une quantité d'informations stockée dans le dispositif de stockage dans au moins une des conditions lorsque l'opération d'écriture a été exécutée par l'exécuteur de filière, et lorsque l'opération de lecture a été exécutée par l'exécuteur de filière ; et
l'opération d'écriture et l'opération de lecture sont respectivement comprises dans des filières différentes les unes des autres ; et
le dispositif de stockage comprend une pluralité de dispositifs de stockage (214, 224, 234) chacun placé entre les filières à exécuter séquentiellement et en stockant des informations qui sont écrites par l'exécution des filières précédentes et lues par l'exécution de filière suivante,
**caractérisé en ce que**
une pluralité de filières séquentielles sont exécutées par une pluralité d'unités de traitement centrales (213, 223, 233) et
la pluralité d'unités de traitement centrales (213, 223, 233) comprennent : une première unité de traitement centrale (213) pour exécuter une première filière comprenant l'opération d'écriture ; et une seconde unité de traitement centrale (223) pour exécuter une seconde filière incluant l'opération de lecture ; et
le dispositif de commande de priorité compare la quantité d'informations stockée dans une de la pluralité de dispositifs de stockage avec une quantité de référence prédéterminée, la quantité d'informations étant incrémentée de un lorsqu'une opération d'écriture est réalisée dans celui correspondant de la pluralité de dispositifs de stockage et étant décrémentées de un lorsqu'une opération de lecture est réalisée par celui correspondant de la pluralité de dispositifs de stockage et exécute une opération d'augmentation de la priorité de la seconde filière pour être plus élevée que la priorité de la première filière, si la quantité d'informations stockée dans ladite une de la pluralité de dispositifs de stockage est plus grande que la quantité de référence.

2. Dispositif de traitement d'informations (200) selon la revendication 1, dans lequel :
le dispositif de commande de priorité exécute une opération d'augmentation de la priorité de la première filière pour être plus élevée que la priorité de la seconde filière, si la quantité d'informations est plus petite que la quantité de référence, et exécute une opération de maintien de la priorité actuelle de la première filière et une opération de maintien de la priorité actuelle de la seconde filière si la quantité d'informations est égale à la quantité de référence.

3. Dispositif de traitement d'informations (200) selon la revendication 1, dans lequel :
le dispositif de commande de priorité compare la quantité d'informations avec une autre quantité de référence qui est plus petite que la quantité de référence, et exécute une opération d'augmentation de la priorité de la première filière pour être plus élevée que la priorité de la seconde filière, si la quantité d'informations est plus petite que ladite autre quantité de référence.

4. Dispositif de traitement d'informations (200) selon la revendication 1, dans lequel :
la pluralité d'unités de traitement centrales exécutent un premier traitement, et un second traitement différent du premier traitement,
le premier traitement et le second traitement comprennent une filière comprenant une opération d'écriture et une filière comprenant une opération de lecture, respectivement, et
le dispositif de commande de priorité règle la priorité de la filière comprise dans le premier traitement plus élevé que la priorité de la filière comprise dans le second traitement, si un rang de priorité du premier traitement est plus élevé qu'un rang de priorité du second traitement.

5. Dispositif de traitement d'informations (200) selon la revendication 1, dans lequel :
la pluralité d'unités de traitement centrales exécutent un premier traitement, et un second traitement différent du premier traitement,
le premier traitement et le second traitement comprennent une filière comprenant une opération d'écriture et une filière comprenant une opération de lecture, respectivement,
la priorité comprend un premier niveau de priorité, et un second niveau de priorité plus élevé que le premier niveau de priorité, et
le dispositif de commande de priorité règle le premier niveau de priorité de la filière comprise dans le premier traitement plus élevé que le premier niveau de priorité de la filière comprise dans le second traitement, et règle le second niveau de priorité de la filière comprise dans le premier traitement plus élevé que le second niveau de priorité de la filière comprise dans le second traitement, si un rang de priorité du premier traitement est plus élevé qu'un rang de priorité du second traitement.

6. Dispositif de traitement d'informations (200) selon la revendication 2, dans lequel :
la pluralité de filières comprennent une première filière d'exécution d'une première opération de prise de vue, et la seconde filière d'exécution d'une seconde opération de prise de vue par rapport à un résultat de traitement de la première opération de prise de vue.

7. Dispositif de traitement d'informations (200) selon la revendication 1, dans lequel :
la priorité comprend un premier niveau de priorité, et un second niveau de priorité plus élevé que le premier niveau de priorité.

8. Procédé de traitement d'informations, comprenant :
une étape d'exécution de filière d'exécution d'une filière comprenant une opération d'écriture d'écriture d'informations dans un dispositif de stockage et une filière comprenant une opération de lecture de lecture des informations du dispositif de stockage ; et
une étape de commande de priorité de commande d'une priorité de la filière sur la base de la quantité d'informations stockée dans le dispositif de stockage dans au moins une des conditions lorsque l'opération d'écriture a été exécutée dans l'étape d'exécution de filière, et lorsque l'opération de lecture a été exécutée dans l'étape d'exécution de filière, et
l'opération d'écriture et l'opération de lecture sont respectivement comprises dans les filières différentes l'une de l'autre, et
le dispositif de stockage comprend une pluralité de dispositifs de stockage chacun placé entre les filières à exécuter séquentiellement et stocker des informations qui sont écrites par l'exécution d'une filière précédente et lues par l'exécution d'une filière suivante,
**caractérisé en ce que**
l'étape d'exécution de filière comprend une pluralité d'étapes d'exécution de filière chacune réalisée sur une d'une pluralité d'unités de traitement centrales pour exécuter une pluralité de filières séquentielles, et
la pluralité d'étapes d'exécution de filière comprend : une première étape d'exécution de filière pour exécuter une première filière comprenant l'opération d'écriture ; et une seconde étape d'exécution de filière pour exécuter une seconde filière comprenant l'opération de lecture ; et
l'étape de commande de priorité compare la quantité d'informations stockée dans une de la pluralité de dispositifs de stockage avec une quantité de référence prédéterminée, la quantité d'informations étant incrémentée de un lorsqu'une opération d'écriture est réalisée dans celui correspondant de la pluralité de dispositifs de stockage et étant décrémentée de un lorsqu'une opération de lecture est réalisée à partir de celui correspondant de la pluralité de dispositifs de stockage et exécute une opération d'augmentation de la priorité de la seconde filière pour être plus élevée que la priorité de la première filière, si la quantité d'informations stockée dans ledit un de la pluralité de dispositifs de stockage est plus grande que la quantité de référence.

9. Support d'enregistrement lisible par ordinateur enregistré avec un programme de traitement d'informations qui conduit un ordinateur à fonctionner comme :
un dispositif de stockage pour y stocker des informations ;
un exécuteur de filière dans une unité de traitement centrale pour exécuter une filière comprenant une opération d'écriture d'écriture d'informations dans le dispositif de stockage, et une filière comprenant une opération de lecture de lecture des informations à partir du dispositif de stockage ; et
un dispositif de commande de priorité pour commander une priorité de la filière sur la base d'une quantité d'informations stockée dans le dispositif de stockage dans au moins une de conditions lorsque l'opération d'écriture a été exécutée par l'exécuteur de filière, et lorsque l'opération de lecture a été exécutée par l'exécuteur de filière, et
l'opération d'écriture et l'opération de lecture sont respectivement comprises dans des filières différentes l'une de l'autre, et
le dispositif de stockage comprend une pluralité de dispositifs de stockage (214, 224, 234) chacun placé entre les filières à exécuter séquentiellement et pour stocker des informations qui sont écrites par l'exécution de la filière précédente et lues par l'exécution de la filière suivante,
**caractérisé en ce que**
une pluralité de filières séquentielles sont exécutées par une pluralité d'unités de traitement centrales (213, 223, 233), et
la pluralité d'unités de traitement centrales (213, 223, 233) comprennent :
une première unité de traitement centrale (213) pour exécuter une première filière comprenant l'opération d'écriture ; et une seconde unité de traitement centrale (223) pour exécuter une seconde filière comprenant l'opération de lecture, et
le dispositif de commande de priorité compare la quantité d'informations stockée dans une de la pluralité de dispositifs de stockage avec une quantité de référence prédéterminée, la quantité d'informations étant incrémentée de un lorsqu'une opération d'écriture est réalisée dans celui correspondant de la pluralité de dispositifs de stockage et étant décrémentées de un lorsqu'une opération de lecture est réalisée à partir de celui correspondant de la pluralité de dispositifs de stockage et exécute une opération d'augmentation de la priorité de la seconde filière pour être plus élevée que la priorité de la première filière, si la quantité d'informations stockée dans celui de la pluralité de dispositifs de stockage est plus grande que la quantité de référence.
